# EUROPÄISCHE PATENTSCHRIFT

(11) **EP 2 404 885 B1**
(45) Veröffentlichungstag und Bekanntmachung des Hinweises auf die Patenterteilung: **06.07.2016**
(21) Anmeldenummer: 11003110.1
(22) Anmeldetag: 13.04.2011
(51) Int. Cl.: C04B 28/10, C04B 28/18, C04B 40/06, C04B 103/10, C04B 111/10

(54) **Neue Baustoffmischungen**
New construction material mixtures
Nouveaux mélanges de matériaux de construction

(30) Priorität: 06.07.2010 DE 102010026311; 16.07.2010 DE 102010027325
(43) Veröffentlichungstag der Anmeldung: 11.01.2012
(73) Patentinhaber: quick-mix Gruppe GmbH & Co. KG, 49090 Osnabrück (DE)
(72) Erfinder: Kanig, Martin, Dr., 49565 Bramsche (DE); Simon, Walter, 56743 Mendig (DE)
(74) Vertreter: Von Rohr Patentanwälte Partnerschaft mbB

(56) Entgegenhaltungen:
- DE-B3- 10 315 865
- CIZER, O. ET AL.: "Carbonation reaction of lime hydrate and hydraulic binders at 20°C", FIRST INTERNATIONAL CONFERENCE ON ACCELERATED CARBONATION FOR ENVIRONMENTAL AND MATERIAL ENGINEERING, 14. Juni 2006 (2006-06-14), XP000002658849, London
- V.INDRAWAN, A.MANAF: "Mechanical Strength of Trass as Supplementary Cementing Material", JOURNAL OF PHYSICAL SCIENCE, Bd. 19, Nr. 2, 2008, Seiten 51-59, XP000002658850,
- BILLONG N ET AL: "Effect of mixture constituents on properties of slaked lime-metakaolin-sand mortars containing sodium hydroxide", CEMENT AND CONCRETE COMPOSITES, ELSEVIER APPLIED SCIENCE, BARKING, GB, Bd. 31, Nr. 9, 1. Oktober 2009 (2009-10-01), Seiten 658-662, XP026499509, ISSN: 0958-9465, DOI: 10.1016/J.CEMCONCOMP.2009.06.001 [gefunden am 2009-06-21]

## Beschreibung

Die vorliegende Erfindung betrifft das technische Gebiet der Baustoffe, insbesondere der Baustoff- bzw, Bindemitteltrockenmischungen.

Insbesondere betrifft die vorliegende Erfindung eine trassbasierte Baustofftrockenmischung, insbesondere eine trassbasierte Bindemitteltrockenmischung.

Weiterhin betrifft die vorliegende Erfindung die Verwendung dieser Baustofftrockenmischung, insbesondere Bindemitteltrockenmischung, in oder als Bindemittel(n), insbesondere zur Herstellung von Putzen, Mörteln, Bodenmassen, Bodenausgleichsmassen, Estrichen sowie Spachtel- und Ausgleichsmassen, sowie die unter Verwendung dieser Baustofftrockenmischung hergestellten Bindemittel, insbesondere Putze, Mörtel, Bodenmassen, Bodenausgleichsmassen, Estriche sowie Spachtel- und Ausgleichsmassen.

Schließlich betrifft die vorliegende Erfindung ein Verfahren zur Erhöhung der Festigkeit, insbesondere der Druck- bzw, Biegefestigkeit, eines Bindemittelsystems, insbesondere eines zementarmen oder zementfreien Bindemittelsystems.

Leistungsstarke Bindemittelsysteme sind für moderne Bauvorhaben unerlässlich, da sie die wesentliche Komponente von Mörteln, Putzen, Betonen, Ausgleichsmassen, Estrichen oder dergleichen sind und diesen die nötige Festigkeit verleihen.

In der Praxis werden vorrangig hydraulische Bindemittelsysteme, d. h. Bindemittelsysteme eingesetzt, welche durch chemische Reaktion in Gegenwart von Wasser (der so genannten Hydratation) abbinden, da die einmal eingesetzte Abbindereaktion in der Folge im Wesentlichen unabhängig von äußeren Faktoren ist und sich die ausgehärteten Bindemittelsysteme im Allgemeinen durch eine gute Festigkeit und Beständigkeit auszeichnen,

Insbesondere zementhaltige Bindemittelsysteme finden verbreitet Anwendung, da sie mit einer Vielzahl von Baustoffen gemeinsam verarbeitet werden können, die ausgehärteten Bindemittelsysteme im Allgemeinen eine gute Festigkeit bzw. Beständigkeit aufweisen und zementhaltige Baustoffinischungen darüber hinaus für zahlreiche Anwendungsmöglichkeiten vorkonfektioniert werden können und lagerstabil sind,

So beschreibt beispielsweise die DE 34 20 462 A1 ein anorganisches hydraulisches Bindemittel auf der Basis von Calciumaluminat-Zement, einem Calciumsulfat-Träger sowie mindestens einem leichten Zuschlagstoff. Das mit Wasser angemachte Bindemittelgemisch soll als Dämm- und Abdeckschicht Verwendung finden und unter vollständiger Bindung des Anmachwassers schnell erhärten, so dass die Oberfläche bereits nach wenigen Stunden begehbar ist.

Weiterhin beschreibt die DE 696 23 832 T2 einen hydraulischen Zement auf Basis von Portlandzementklinker, welcher weiterhin Gips sowie einen organischen wassereinsparenden Bestandteil enthält. Bei dem organischen, den Wasserbedarf reduzierenden Bestandteil handelt es sich bevorzugt um wasserlösliche Salze aus der Formaldehydkondensation mit Produkten der Sulfatbildung monozyklischer oder polyzyklischer aromatischer Kohlenwasserstoffe oder um wasserlösliche Salze der Produkte der Sulfatbildung heterozyklischer Verbindungen oder aber um wasserlösliche Salze der Produkte der Sulfatbildung kondensierter monozyklischer oder polyzyklischer aromatischer Kohlenwasserstoffe. Die spezielle Bindemittelzusammensetzung soll einerseits die Menge des zum Abbinden des Zements benötigten Wassers reduzieren und andererseits eine erhöhte Festigkeit von Zementbreien, Mörteln und Betonen bewirken.

Hydraulische Bindemittel auf Zementbasis besitzen zwar im Allgemeinen eine hohe Druckfestigkeit im ausgehärteten Zustand; als nachteilig erweist sich jedoch, dass das ausgehärtete Bindemittel bisweilen sehr spröde ist und unter mechanischer Belastung oftmals eine unerwünschte Rissbildung auftritt.

Weiterhin weisen Bindemittelsysteme mit einem hohen Zementanteil nicht immer ausreichende Frühfestigkeiten auf, weshalb diese Bindemittelsysteme nur bedingt zur Herstellung von Putzen und Mörteln - bei welchen eine hohe Frühfestigkeit unerlässlich ist - geeignet sind, oder aber aufwendig durch spezielle Mischung mit weiteren Komponenten bzw. Additiven modifiziert werden müssen.

Während zementhaltige Bindemittelsysteme im Allgemeinen mit einer Vielzahl von Baustoffen verarbeitet bzw. verbaut werden können, weisen sie jedoch eine oftmals mangelnde Kompatibilität mit alter Bausubstanz und insbesondere mit Naturstein auf. Die mangelnde Kompatibilität der zementhaltigen Bindemittelsysteme zeigt sich in diesen Fällen in einer ungenügenden Haftung des zementhaltigen Bindemittels an der bereits vorhandenen Bausubstanz bzw. in einem "Ausblühen" des zementhaltigen Bindemittels. Aufgrund dieser Inkompatibilität ist der Einsatz von zementhaltigen Bindemittelsystemen in der Bausanierung bzw. -restaurierung und in der Denkmalpflege sowie in der Garten- und Landschaftspflege stark eingeschränkt, da dort oftmals Natursteine als Baustoffe genutzt werden.

Darüber hinaus ist die Herstellung von Zement, insbesondere von Portlandzementklinker, äußerst energieaufwendig, so dass die Herstellung von reinem Zementklinker sehr kostenintensiv und umweltbelastend ist und nicht zuletzt eine sehr ungünstige CO₂-Bilanz aufweist.

Es hat daher im Stand der Technik nicht an Versuchen gefehlt, den Zementanteil bzw. den Zementklinkeranteil in Bindemittelsystemen, insbesondere in hydraulischen Bindemittelsystemen, zu reduzieren oder zementfreie hydraulische Bindemittelsysteme bereit zu stellen.

So offenbart beispielsweise die DD-PS 213 420 eine zementreduzierte Bindemittelmischung, in welcher ein Teil des Zements durch ein natürliches bzw. künstliches Puzzolan ersetzt wird. Auf diese Weise soll sich die zur Herstellung des Bindemittels benötigte Energiemenge deutlich reduzieren lassen. Zementarme oder gar zementfreie Bindemittelmischungen lassen sich aber auf diese Weise nicht erhalten.

Auch die DE-OS 2 259 274 offenbart ein hydraulisches Bindemittel mit einem homogenen Gemisch aus Portlandzement und einem gemahlenen kieselsäurehaltigen Zusatz, welcher aus Lavamehl besteht und dessen Gewichtsanteil am Gesamtgewicht der Mischung etwa ein Drittel beträgt. Durch die Verwendung von Lavamehl sollen die Herstellungskosten des Bindemittels deutlich reduziert werden, wobei auch eine höhere Festigkeit als bei Trass/Zement-Mischungen erreicht werden soll.

Die DE 10 2004 026 229 A1 betrifft ein Verfahren zum Herstellen einer so genannten Haftbrücke, welche Zement, Schlacke und Sulfat sowie Zuschläge enthält. Die Bindemittelmischung kann dabei auch ein latenthydraulisches Bindemittel, vorzugsweise auf Basis von Trass, Puzzolanen oder Flugasche, in Mengen von bis zu 40 Gew.-% enthalten.

Die DE 44 41 662 A1 beschreibt eine Zementsuspension zum Verpressen von Hohlräumen in Steinmaterial, wobei das Bindemittelgemisch bis zu 50 Gew.-% eines Trassmaterials enthält.

Weiterhin ist beispielsweise eine silikatische Baustoffmischung bekannt, welche mindestens ein Wasserglaspulver, mindestens einen Wasserglashärter, mindestens ein latenthydraulisches bzw. puzzolanisches Bindemittel sowie ein Komplexierungsmittel enthält (vgl. z. B. DE 10 2008 033 447 B3). Die Baustoffmischung ist zementfrei und soll in einem weiten Temperaturbereich einsatzfähig sein, schnell aushärten sowie wasser- und chemikalienbeständig sein. Nachteilig an dieser Baustoffmischung ist jedoch der sehr hohe Alkaligehalt in Form des Wasserglases und des Wasserglashärters, deren Anteile bis zu 35 Gew.-% der gesamten Baustoffmüschung betragen können; ohne diese großen Alkalimenge wird nur eine geringe Anfangsfestigkeit der mit Wasser angemachten Mörtel erreicht, Weiterhin ist die Baustofftrockenmischung empfindlich gegenüber Wasser und zeigt hygroskopisches Verhalten bei Feuchtlagerung. Darüber hinaus bindet die Baustoffzusammensetzung sehr schnell ab, so dass zur Verlängerung der Verarbeitungszeit Komplexierungsmittel eingesetzt werden müssen, welche Calciumionen binden und die Ausbildung von CSH-Phasen verhindern oder aber zumindest stark verzögern. Nicht zuletzt die dadurch erforderliche genaue und spezielle Abstimmung der einzelnen Bestandteile der Mischung aufeinander, welche nur schwierig zu erreichen ist, limitiert den Einsatz solcher Baustoffmischungen in der Praxis stark.

Weiterhin offenbart die DE 10 2008 055 064 A1 säureresistente, hydraulisch abbindende Massen, welche zementfrei sind. Die Bindemittelzusammensetzungen bestehen insbesondere aus Hüttensand, einem oder mehreren Puzzolanen, Füllstoffen sowie Polymerisaten auf Basis ethylenisch ungesättigter Monomere und Wasser.

Die DE 10 315 865 B3 betrifft die Verwendung einer Mischungszusammensetzung als Fliesenkleber, wobei die Zusammensetzung ein hydraulisches Bindemittel, 0,1 bis 10 Gew.-%, bezogen auf das Gesamtgewicht der Fliesenkleber-Trockenmasse, einer Metakaolinkomponente und gegebenenfalls einen Leichtfüllstoff enthält. Als hydraulisches Bindemittel enthält der Fliesenkleber vorzugsweise Zemente, wie z. B, Portlandzement CEM I, und eine Metakaolinkomponente, die vorzugsweise Partikelgrößen zwischen 0,01 und 50 µm aufweisen sollte. Die Verformungseigenschaften des Fliesenklebers werden durch Kombination mit Leichtfüllstoffen verbessert, ohne dabei gleichzeitig den Anteil an organischen Bindemitteln erhöhen zu müssen.

Die wissenschaftliche Veröffentlichung O. Cizer, K. Van Balen und D. Van Gemert "carbonaton reaction of lime hydrate and hydraulic binders at 20 °C", First International Conference on Accelerated Carbonation for Environmental and Materials Engineering, The Royal Society, London, 12-14 June 2006 betrifft die Carbonisierung, d. h. die Aufnahme von CO₂, verschiedener kalkhaltiger Bindemittelsysteme, wie beispielsweise Calciumhydroxid, hydraulischem Kalk sowie Kalk/Puzzolan-Gemischen.

Schließlich betrifft die wissenschaftliche Veröffentlichung V. Indrawati und A. Manaf "Mechanical Strength of Trass as Supplementary Cementing Material", Journal of Physical Science, Vol. 19(2), Pages 51 to 59, 2008 die Eignung von Trass in Indonesien als ergänzendes zementäres Material. Zu diesem Zweck werden die mechanischen Eigenschaften von Puzzolan/Kalk-Systemen untersucht.

Es hat sich bei den zementarmen Bindemittelgemischen als nachteilig erwiesen, dass sie im Vergleich zu reinen Zementbindemittelsystemen eine geringe mechanische Belastbarkeit aufweisen. Zugleich ist jedoch die Sprödigkeit zementbasierter Bindemittelsysteme auch in den zementarmen Systemen inhärent vorhanden, weshalb in der Folge auch in den ausgehärteten zementarmen Bindemittelsystemen häufig Rissbildungen auftreten. Die Inkorporierung organischer Polymerisate zur Kompensation dieses unverwünschten Verhaltens dagegen führt zu Bindemittelsystemen mit relativ hohem organischem Anteil.

Darüber hinaus besitzen die zuvor beschriebenen zementarmen Bindemittelsysteme des Standes der Technik oftmals eine ähnlich geringe bzw. nur unzureichende Verträglichkeit mit alter Bausubstanz oder Naturstein wie zementreiche Bindemittelsysteme und eignen sich folglich gleichfalls nicht bzw. nur in eingeschränktem Maße zur Verwendung in der Bausanierung bzw. -restaurierung sowie in der Denkmalpflege und im Landschafts- und Gartenbau.

Vollkommen zementfreie Bindemittelsysteme, insbesondere hydraulische zementfreie Bindemittelsysteme, weisen dagegen oftmals eine nur geringe mechanische Belastbarkeit auf oder bestehen aus sehr komplexen Stoffmischungen, welche für den jeweiligen Anwendungszweck aufwendig abgestimmt werden müssen, so dass ihre Anwendbarkeit in der Praxis nur sehr begrenzt gegeben ist.

Die Aufgabe der vorliegenden Erfindung besteht somit darin, eine Baustofftrockenmischung, insbesondere eine Bindemitteltrockenmischung, bereitzustellen, welche sich zur Herstellung zernentarmex und/oder zementfreier Bindemittelsysteme eignet und die zuvor geschilderten Nachteile des Standes der Technik zumindest im Wesentlichen vermeidet oder aber wenigstens verringert bzw. abschwächt.

Zur Lösung der zuvor geschilderten Aufgabe schlägt die vorliegende Erfindung eine Baustofftrockenmischung, insbesondere Bindemitteltrockenmischung, nach Anspruch 1 vor; weitere vorteilhafte Ausgestaltungen sind Gegenstand der diesbezüglichen abhängigen Ansprüche.

Weiterer Gegenstand der vorliegenden Erfindung ist die Verwendung einer Baustofftrockenmischung, insbesondere einer Bindemitteltrockenmischung, nach Anspruch 16.

Wiederum weiterer Gegenstand der vorliegenden Erfindung ist ein Bindemittel nach Anspruch 17; weitere vorteilhafte Ausgestaltungen sind Gegenstand des diesbezüglichen abhängigen Anspruchs.

Weiterer Gegenstand der vorliegenden Erfindung ist die erfindungsgemäße Verwendung einer Kombination von Trass und Kaolin bzw. Metakaolin, wie in Anspruch 19 definiert.

Schließlich ist wiederum weiterer Gegenstand der vorliegenden Erfindung ein Verfahren zur Erhöhung der Festigkeit eines Bindemittelsystems nach Anspruch 20; weitere vorteilhafte Ausgestaltungen sind Gegenstand des diesbezüglichen abhängigen Anspruchs.

Es versteht sich von selbst, dass besondere Ausgestaltungen und Ausführungsformen, welche nur im Zusammenhang mit einem Erfindungsaspekt beschrieben sind, auch in Bezug auf die übrigen Erfindungsaspekte entsprechend gelten, ohne dass dies ausdrücklich beschrieben ist.

Bei allen nachstehend genannten relativen bzw. prozentualen Angaben, insbesondere gewichtsbezogenen Mengenangaben, ist zu beachten, dass diese im Rahmen der erfindungsgemäßen Zusammensetzung vom Fachmann derart auszuwählen sind, dass sie sich in der Summe - gegebenenfalls unter Einbeziehung optionaler weiterer Komponenten bzw. Inhaltsstoffe bzw. Zusatzstoffe bzw, Bestandteile, insbesondere wie nachfolgend definiert - stets zu 100 % bzw. 100 Gew.-% ergänzen. Dies versteht sich für den Fachmann aber von selbst.

Im Übrigen gilt, dass der Fachmann anwendungsbezogen oder einzelfallbedingt von den nachfolgend aufgeführten Mengenangaben abweichen kann, ohne dass er den Rahmen der vorliegenden Erfindung verlässt.

Gegenstand der vorliegenden Erfindung ist somit - gemäß einem ersten Aspekt der vorliegenden Erfindung - eine Baustofftrockenmischung, insbesondere Bindemitteltrockenmischung, welche mindestens einen Kalkträger, insbesondere ausgewählt aus Calciumoxid (Branntkalk, CaO) und/oder Calciumhydroxid (Löschkalk, Ca(OH)₂), zusammen mit einer Kombination von (a) Trass einerseits und (b) Kaolin und/oder Metakaolin andererseits enthält, wobei die Baustofftrockenmischung Trass in Mengen von 5 bis 60 Gew.-%, bezogen auf die Baustofftrockenmischung, enthält und wobei die Baustofftrockenmischung weniger als 1 Gew.-% Zement enthält.

Denn, wie die Anmelderin überraschenderweise gefunden hat, lassen sich durch gezielte Kombination von (a) Trass einerseits und (b) (Meta-)Kaolin andererseits Baustofftrockenmischungen bzw, Bindemitteltrockenmischungen bereitstellen, welche sich zur universellen Verwendbarkeit als oder in Bindemittel(n), insbesondere zur Herstellung von Putzen, Mörteln, Bodenmassen, Bodenausgleichsmassen, Estrichen sowie Spachtel- und Ausgleichsmassen, eignen.

Besonders gute Ergebnisse werden erhalten, wenn der erfindungsgemäßen Baustofftrockenmischung zusätzlich noch eine Aktivator- bzw. Anregerkomponente, insbesondere auf Alkali- und/oder Erdalkalibasis, zugesetzt ist, wie nachfolgend noch im Detail erläutert. Zur Vermeidung unnötiger Wiederholung kann an dieser Stelle daher auf die nachfolgenden diesbezüglichen Ausführungen verwiesen werden.

Auf Basis der erfindungsgemäßen Baustofftrockenmischung bzw. Bindemitteltrockenmischung können zementarme und/oder zumindest im Wesentlichen zementfreie Bindemittel formuliert werden, welche hervorragende mechanische Eigenschaften, insbesondere Druckfestigkeiten, aufweisen und nicht die für zementbasierte Bindemittelsysteme übliche Sprödigkeit besitzen. Auf diese Weise neigen die mit der erfindungsgemäßen Baustofftrockenmischung bzw. Bindemitteltrockenmischung hergestellten Bindemittelsysteme in weitaus geringerem Maße zur Bildung von Rissen als herkömmliche zementhaltige Bindemittelsysteme.

Insbesondere war es überraschend, dass die spezielle Kombination aus (a) Trass einerseits und (b) (Meta-)Kaolin andererseits zu einer synergistischen Festigkeitssteigerung gegenüber den Einzelkomponenten führt, wobei sowohl die Früh- als auch die Endfestigkeit des Bindemittels deutlich gesteigert wird.

Die erfindungsgemäße Baustofftrockenmischung bzw. Bindemitteltrockenmischung weist bei ihrer Verwendung in Bindemittelsystemen eine sehr gute Kompatibilität mit den meisten Bausubstanzen auf, weshalb die erfindungsgemäße Baustofftrockenmischung bzw. Bindemitteltrockenmischung für eine Vielzahl von Einsatzbereichen verwendet werden kann.

Insbesondere eignet sich die erfindungsgemäße Baustofftrockenmischung bzw. Bindemitteltrockenmischung zur Ausbesserung bzw. Reparatur alter Bausubstanz oder zur gemeinsamen Verwendung mit Natursteinen. Die erfindungsgemäße Baustofftrockenmischung bzw. Bindemitteltrockenmischung kann daher insbesondere bei der Bausanierung und Baurestaurierung sowie bei der Denkmalpflege und im Garten- und Landschaftsbau zum Einsatz kommen. Hierauf ist ihr Anwendungsbereich aber keinesfalls beschränkt: Vielmehr ist die erfindungsgemäße Baustofftrockenmischung derart universell einsetzbar, dass sie auch überall dort verwendet werden kann, wo auch zementäre Systeme zum Einsatz kommen.

Die hervorragenden mechanischen Eigenschaften von Bindemittelsystemen, welche mit der erfindungsgemäßen Baustofftrockenmischung bzw. Bindemitteltrockenmischung hergestellt werden können, lassen sich - ohne sich auf eine Theorie festlegen zu wollen - dadurch erklären, dass das verwendete (Meta-)Kaolin die Hydraulizität der Trasskomponente entscheidend verbessert, d. h. ein Abbinden und Erhärten der Trasskomponente unterstützt bzw. fördert.

Ein weiterer Vorteil der erfindungsgemäßen Baustofftrockenmischung bzw. Bindemitteltrockenmischung ist darin zu sehen, dass sie zur Herstellung eines zementarmen oder sogar zumindest im Wesentlichen zementfreien Bindemittels verwendet werden kann, ohne dass der Mischung eine spezielle Anregerkomponente, insbesondere auf Basis von (Erd-)Alkalioxiden oder (Erd-)Alkalihydroxiden, zugesetzt werden muss. Die erfindungsgemäße Baustofftrockenmischung bzw. Bindemitteltrockenmischung kann jedoch optional eine Anregerkomponente enthalten, wobei dies - wie nachfolgend ausführlich dargelegt - bei Verwendung technischer Ausgangsstoffe bzw. bei Verwendung von Stoffen, welche in technischen Prozessen anfallen, im Allgemeinen nicht erforderlich ist, da diese im Allgemeinen bereits ausreichende Mengen an Alkali und/oder Erdalkali enthalten.

Darüber hinaus wird zur Herstellung der erfindungsgemäßen Baustofftrockenmischung bzw. Bindemitteltrockenmischung eine sehr viel geringere Energiemenge benötigt als zur Herstellung einer entsprechenden Menge einer zementbasierten Baustofftrockenmischung erforderlich wäre. Insbesondere wird bei der Herstellung kein klimaschädliches CO₂ generiert.

Wie oben bereits ausgeführt, handelt es sich beim Gegenstand der vorliegenden Erfindung gemäß dem ersten Erfindungsaspekt um eine Baustofftrockenmischung, insbesondere eine Bindemitteltrackenmischung,

Unter einem Baustoff soll im Rahmen der vorliegenden Erfindung insbesondere jeder im Bauwesen verwendete Stoff verstanden werden, wobei es sich bei Baustoffen zumeist um anorganische Stoffe handelt. Baustoffe werden in natürliche Baustoffe, wie beispielsweise Natursteine, Holz, Schotter, Kies und Sand, und künstliche Baustoffe unterteilt. Zu den künstlichen Baustoffen zählen Schlacken, keramische Baustoffe, wie beispielsweise Klinker, Ziegel und Keramiken, Glas, Kunststoffe, Moniereisen und dergleichen sowie Bindemittel und die mit den Bindemitteln hergestellten Produkte, wie Beton. Zu den Baustoffen werden jedoch auch Isoliermaterialien, wie beispielsweise Glaswolle, Gesteinswolle und Schaumstoffe, sowie Bauhilfsmittel und Dichtstoffe gezählt. Für weitergehende Einzelheiten zu dem Begriff der Baustoffe kann insbesondere verwiesen werden auf Römpp Chemielexikon, 10. Auflage, Georg Thierne Verlag, Stuttgart/New York, Band 1, 1998, Seite 370, Stichwort: "Baustoffe", sowie die dort referierte Literatur, deren jeweiliger Inhalt hiermit durch Bezugnahme vollumfänglich eingeschlossen ist.

Bindemittel sind folglich eine Untergruppe der Baustoffe, wobei im Rahmen der vorliegenden Erfindung der Begriff des Bindemittels sehr umfassend zu verstehen ist. Insbesondere werden im Rahmen der vorliegenden Erfindung hydraulische und latenthydraulische bzw. puzzolanische Bindemittel sowie deren Mischungen mit dem Begriff "Bindemittel" bezeichnet. Solche Bindemittel, die nur an Luft erhärten (sogenannte "Luftbinder", wie Gips, Sorelzement, Anhydrit, Magnesia-Abbindemittel, Weißkalk etc.) sind nichthydraulische Bindemittel, während man hydraulischen Kalk und Zement als sogenannte hydraulische Bindemittel bezeichnet, da sie durch Hydratation bzw, auch unter Wasser abbinden. Erfolgt dieses Abbinden erst durch Einwirkung von Zusätzen bzw. Anregern, spricht man von latenthydraulischen Bindemitteln, wie im Fall von Hochofenschlacken oder von Trass, Für weitergehende Einzelheiten zum Begriff des Bindemittels kann beispielsweise verwiesen werden auf Römpp Chemielexikon, a.a.O., Seiten 433/434, Stichwort: "Bindemittel", sowie die dort referierte Literatur, deren jeweiliger Inhalt hiermit durch Bezugnahme vollumfänglich eingeschlossen ist.

Weiterhin wird der Begriff "Trockenmischung" erfindungsgemäß insbesondere gewählt, um die Mischung als solche gegenüber dem eigentlichen Bindemittel, d. h. der mit Wasser angemachten Trockenmischung, welche zu Mörteln, insbesondere Putz- und Mauermörteln, Putzen, Estrichen sowie Ausgleichs- und Spachtelmassen, weiterverarbeitet werden kann, abzugrenzen. Der Begriff "Trockenmischung" bezeichnet also die insbesondere partikelförmige Basis- oder Ausgangsmischung, aus der sich durch Anmachen mit Wasser das eigentliche Bindemittel herstellen lässt,

Die erfindungsgemäße Baustofftrockenmischung, insbesondere Bindemitteltrockenmischung, enthält neben Trass und (Meta-)Kaolin außerdem mindestens einen Kalkträger, insbesondere Calciumoxid (CaO) und/oder Calciumhydroxid (Ca(OH)₂), um ein Abbinden des latenthydraulischen Bindemittels Trass zu fördern bzw. um insbesondere ein Abbinden des Trasses zu ermöglichen. Calciumoxid wird synonym auch als Branntkalk bezeichnet und wird im technischen Maßstab durch Erhitzen von Kalkstein (Calciumcarbonat, Ca-CO₃), das sogenannte "Kalkbrennen", gewonnen. Während des Herstellungsprozesses zersetzt sich der Kalkstein durch die Temperatureinwirkung zu Calciumoxid (CaO) und Kohlendioxid (CO₂).

Calciumhydroxid wird in analoger Weise synonym auch als Löschkalk bezeichnet, da es technisch durch Versetzen von Calciumoxid mit Wasser, das sogenannte "Kalklöschen", hergestellt wird. Beim Kalklöschen reagiert Calciumoxid mit Wasser unter starker Wärmeentwicklung zu Calciumhydroxid. Weitere synonyme Bezeichnungen für Calciumhydroxid sind gelöschter Kalk und Kalkhydrat.

Brannt- und/oder Löschkalk werden erfindungsgemäß auch mit dem generischen Begriff "Kalkträger" bezeichnet.

Wie eingangs beschrieben, enthält die erfindungsgemäße Baustofftrockenmischung, insbesondere Bindemitteltrockenmischung, neben der Calciumoxid- bzw. Calciumhydroxidkomponente eine spezielle Kombination von Trass einerseits und Kaolin bzw, Metakaolin andererseits.

Trass ist ein natürlicher, saurer und aufbereiteter Tuffstein aus der Gruppe der Puzzolane, welcher aus glasigen und kristallinen Phasen aufgebaut ist. In chemischer Hinsicht besteht Trass überwiegend aus Siliciumdioxid (Kieselsäure) und Aluminiumoxid (Tonerde). Daneben weist Trass noch geringere Anteile an Erdalkalien, Eisenoxid, Alkalien sowie physikalisch und chemisch gebundenem Wasser auf. Bei Trass handelt es sich um ein latenthydraulisches Bindemittel, d. h. seine hydraulischen Eigenschaften werden erst durch Zugabe von beispielsweise Kalk oder Zement wirksam. Für weitergehende diesbezügliche Einzelheiten kann auf die einschlägige DIN 51043 (August 1979) "Trass - Anforderungen, Prüfung" sowie die dort aufgeführten Referenzen, deren gesamter Offenbarungsgehalt hiermit durch Bezugnahme eingeschlossen ist, verwiesen werden.

Bei Kaolin, synonym auch als Porzellanerde, Porzellanton oder Aluminiumsilikat bezeichnet, handelt es sich um ein eisenfreies, weißes Gestein, welches als Hauptbestandteil Kaolinit enthält. Kaolin ist ein hydratisiertes Aluminiumsilikat, welches näherungsweise durch die vereinfachende und idealisierte Formel Al₂O₃ · 2 SiO₂ · 2 H₂O beschrieben werden kann. Es handelt sich um ein natürliches, feinkörniges und gut kristallisiertes Tonmineral mit einem schichtartigen Aufbau. Kaolin wird technisch in erster Linie als Pigment oder Füllstoff eingesetzt, Beim Erhitzen verliert Kaolin das physikalisch und chemisch gebundende Wasser und wird in Metakaolin überführt, welches näherungsweise durch die vereinfachende und idealisierte Formel Al₂O₃ · 2 SiO₂ beschrieben werden kann. Bei Temperaturen von 100 bis 200 °C wird dabei zuerst das adsorbierte, physikalisch gebundene Wasser abgespalten und im Temperaturbereich zwischen 500 und 800 °C setzt anschließend die Calcinierung ein. Metakaolin besitzt puzzolanische Eigenschaften und wird daher in der Bauindustrie als Bindemittelbestandteil verwendet. Im Rahmen der vorliegenden Erfindung ist es jedoch auch möglich, dass nicht nur reines Kaolin oder reines Metakaolin, sondern bevorzugt auch deren Mischungen verwendet werden; des weiteren können auch teilweise dehydratisierte Kaoline, gegebenenfalls zusammen mit Metakaolin, zum Einsatz kommen.

Was die zuvor beschriebenen Komponenten der erfindungsgemäßen Baustofftrockenmischung anbelangt, so können deren jeweilige Mengenanteile in der Baustofftrockenmischung in weiten Bereichen variieren.

Im Allgemeinen enthält die Baustofftrockenmischung Calciumoxid und/oder Calciumhydroxid in Mengen von 5 von 80 Gew.-%, insbesondere 10 bis 70 Gew.-%, vorzugsweise 15 bis 60 Gew.-%, besonders bevorzugt 20 bis 55 Gew.-%, bezogen auf die Baustofftrockenmischung.

Im Rahmen der vorliegenden Erfindung ist es zudem vorgesehen, dass die Baustofftrockenmischung Trass in Mengen von 5 bis 60 Gew.-%, insbesondere 7,5 bis 50 Gew.-%, vorzugsweise 10 bis 45 Gew.-%, besonders bevorzugt 15 bis 35 Gew.-%, bezogen auf die Baustofftrockenmischung, enthält.

Weiterhin kann die Baustofftrockenmischung Kaolin und/oder Metakaolin in Mengen von insgesamt 5 bis 65 Gew.-%, insbesondere 7,5 bis 60 Gew.-%, vorzugsweise 10 bis 55 Gew.-%, besonders bevorzugt 12,5 bis 50 Gew.-%, bezogen auf die Baustofftrockenmischung, enthalten.

Besonders gute Ergebnisse werden im Rahmen der vorliegenden Erfindung erhalten, wenn die Baustofftrockenmischung die Kombination von Trass einerseits und Kaolin bzw. Metakaolin andererseits in Mengen von 5 bis 55 Gew.-%, insbesondere 10 bis 90 Gew.-%, vorzugsweise 15 bis 85 Gew.-%, besonders bevorzugt 20 bis 80 Gew.-%, ganz besonders bevorzugt 30 bis 70 Gew.-%, bezogen auf die Baustofftrockenmischung, enthält.

Darüber hinaus können auch die Mengenverhältnisse von (a) Trass einerseits und (b) Kaolin bzw. Metakaolin andererseits in der Baustofftrockenmischung im Rahmen der vorliegenden Erfindung in weiten Bereichen variieren. Es hat sich jedoch als besonders vorteilhaft herausgestellt, wenn die Baustofftrockenmischung die Kombination von (a) Trass einerseits und (b) Kaolin und/oder Metakaolin andererseits in einem Gewichtsverhältnis von (a) / (b) im Bereich von 10 : 90 bis 90 : 10, insbesondere 15 : 85 bis 85 : 15, vorzugsweise 20 : 80 bis 80 : 20, besonders bevorzugt 30 : 70 bis 70 : 30, enthält. Insbesondere in den vorgenannten Mengenverhältnissen wird ein synergistisches Zusammenwirken der Komponenten (a) Trass und (b) Kaolin bzw. Metakaolin beobachtet.

Weiterhin hat es sich im Rahmen der vorliegenden Erfindung als vorteilhaft erwiesen, wenn das Calciumoxid (Branntkalk, CaO) und/oder Calciumhydroxid (Löschkalk, Ca(OH)₂) eine spezifische Oberfläche nach Blaine von mindestens 1.000 cm²/g aufweist, Besonders gute Ergebnisse können erzielt werden, wenn das Calciumoxid (Branntkalk, CaO) und/oder Calciumhydroxid (Löschkalk, Ca(OH)₂) eine spezifische Oberfläche nach Blaine im Bereich von 1.000 bis 8.000 cm²/g, vorzugsweise im Bereich von 1.500 bis 6.000 cm²/g, besonders bevorzugt im Bereich von 2.000 bis 5.000 cm²/g, aufweist.

Die physikalischen und chemischen Eigenschaften einer Baustofftrockenmischung bzw. eines Bindemittels, insbesondere die Abbindegeschwindigkeit, werden maßgeblich auch von der Korngröße bzw. von der Korngrößenverteilung der einzelnen Bestandteile beeinflusst bzw. bestimmt. Die Korngrößen und Korngrößenverteilungen der einzelnen Komponenten der erfindungsgemäßen Baustofftrockenmischung können dabei jeweils in weiten Bereichen variieren. Korngrößen und Korngrößenverteilungen können mit den unterschiedlichsten, dem Fachmann an sich bekannten Messmethoden bestimmt werden, beispielsweise über Siebanalysen, Sedimentation oder aber Lichtdiffraktion oder Lichtbeugung (z. B. Laserbeugung).

Die nachfolgenden Korngrößenangaben und Angaben zur Korngrößenverteilung wurden bei Proben, deren größte Partikel einen Durchmesser von weniger als 400 µm aufweisen, mittels Lasergranulometrie, insbesondere mittels Laserdiffraktion bzw. -beugung, bestimmt, wobei Partikelgrößen im Bereich von 0,30 bis 400 µm bestimmt werden konnten. Proben mit Partikelgrößen über 400 µm wurden mittels Siebanalyse untersucht.

Im Folgenden werden zur Beschreibung der Korngrößen und insbesondere der Korngrößenverteilungen nicht die Absolutwerte der Korngrößen angegeben, sondern vielmehr mittlere Korngrößen sowie D50- und D90-Werte aufgeführt. Bei der mittleren Korngröße handelt es um das arithmetische Mittel aus der Summe der Partikelgrößen der einzelnen Teilchen und der Teilchenanzahl.Die D50- und D90-Werte treffen hingegen eine Aussage über die Teilchengrößenverteilung: Der D50-Wert gibt an, dass 50 % aller Teilchen eine Teilchengröße aufweisen, welche kleiner oder gleich dem angegebenen Zahlenwert ist; entsprechendes gilt für den D90-Wert, welcher besagt, dass 90 % aller Teilchen eine Teilchengröße aufweisen, welche kleiner oder gleich dem angegebenen Wert ist.

Im Allgemeinen weist das verwendete Calciumoxid und/oder Calciumhydroxid eine mittlere Korngröße im Bereich von 1 bis 250 µm, insbesondere im Bereich von 5 bis 200 µm, vorzugsweise im Bereich von 10 bis 150 µm, auf.

Weiterhin kann es im Rahmen der vorliegenden Erfindung vorgesehen sein, dass der Trass in Form von Trassmehl vorliegt.

Besonders gute Ergebnisse werden im Rahmen der vorliegenden Erfindung erhalten, wenn der Trass eine spezifische Oberfläche nach Blaine von mindestens 5.000 cm²/g aufweist. Dabei hat es sich als vorteilhaft erwiesen, wenn der Trass eine spezifische Oberfläche nach Blaine im Bereich von 5.000 bis 10.000 cm²/g, vorzugsweise im Bereich von 5.100 bis 8.000 cm²/g, besonders bevorzugt im Bereich von 5.200 bis 6.000 cm²/g, aufweist.

Im Allgemeinen weist der erfindungsgemäß eingesetzte Trass eine mittlere Korngröße im Bereich von 5 bis 100 µm, insbesondere im Bereich von 7,5 bis 75 µm, vorzugsweise im Bereich von 10 bis 50 µm, auf.

Weiterhin hat es sich als vorteilhaft erwiesen, wenn der Trass einen D50-Wert im Bereich von 1 bis 50 µm, insbesondere im Bereich von 2,5 bis 40 µm, vorzugsweise im Bereich von 5 bis 30 µm, aufweist.

Vorteilhaft ist es darüber hinaus, wenn der Trass einen D90-Wert im Bereich von 10 bis 80 µm, insbesondere im Bereich von 20 bis 60 µm, vorzugsweise im Bereich von 25 bis 50 µm, aufweist.

Durch die Verwendung von Trass mit zuvor angegebenen Korngrößen bzw. Korngrößenverteilungen sind besonders leistungsfähige Bindemittelsysteme zugänglich, da die speziellen Korngrößen bzw. Korngrößenverteilungen eine optimale Hydratationsgeschwindigkeit des Trasses gewährleisten, so dass einerseits eine ausreichend lange Verarbeitungszeit und andererseits auch eine sehr gute Frühfestigkeit der angemachten Bindemittelsysteme gewährleistet ist. Ein geeignetes Trassmehl wird beispielsweise von der tubag Trass Vertrieb GmbH & Co. KG, Kruft, Deutschland, unter der Bezeichnung "tubag Trassmehl TM" vertrieben.

Besonders gute Ergebnisse werden im Rahmen der vorliegenden Erfindung erreicht, wenn das Kaolin und/oder Metakaolin eine spezifische Oberfläche, insbesondere eine spezifische Oberfläche nach Blaine, von mindestens 2.000 cm²/g aufweist. Dabei hat es sich als besonders vorteilhaft erwiesen, wenn das Kaolin und/oder Metakaolin eine spezifische Oberfläche, insbesondere eine spezifische Oberfläche nach Blaine, im Bereich von 2.000 bis 8.000 cm²/g, vorzugsweise im Bereich von 2.100 bis 5.000 cm²/g, besonders bevorzugt im Bereich von 2.200 bis 4.000 cm²/g, aufweist.

Was die mittlere Korngröße des erfindungsgemäß eingesetzten Kaolins und/oder Metakaolins anbelangt, so kann diese in weiten Bereichen variieren. Im Allgemeinen weist das Kaolin und/oder Metakaolin eine mittlere Korngröße im Bereich von 5 bis 90 µm, insbesondere im Bereich von 7,5 bis 50 µm, vorzugsweise im Bereich von 10 bis 40 µm, auf.

Gemäß einer besonders bevorzugten Ausführungsform der vorliegenden Erfindung weist das Kaolin und/oder Metakaolin ein D50-Wert von 2 bis 40 µm, insbesondere im Bereich 5 bis 30 µm, vorzugsweise im Bereich von 7,5 bis 25 µm, auf.

Gleichfalls werden gute Ergebnisse erhalten, wenn das erfindungsgemäß eingesetzte Kaolin und/oder Metakaolin einen D90-Wert im Bereich von 5 bis 70 µm, insbesondere im Bereich von 10 bis 60 µm, vorzugsweise im Bereich von 20 bis 50 µm, aufweist.

Besonders gute Ergebnisse werden zudem erzielt, wenn das eingesetzte Kaolin und/oder Metakaolin sowohl die vorgenannten D50-Werte als auch die vorgenannten D90-Werte aufweist.

Im Allgemeinen enthält der Trass, jeweils bezogen auf den Trass, Siliciumdioxid (SiO₂) in Mengen von 50 bis 75 Gew.-% und/oder Aluminiumoxid (Al₂O₃) in Mengen von 10 bis 25 Gew.-% und/oder Calcium- und/oder Alumiumoxid in Mengen von bis zu 15 Gew.-% und/oder Alkali, berechnet als Natrium- und/oder Kaliumoxid, in Mengen von bis zu 10 Gew.-% enthält.

Besonders gute Ergebnisse im Hinblick auf Früh- und Endfestigkeit sowie die Verarbeitungszeit des Bindemittelsystems können darüber hinaus erreicht werden, wenn die Baustofftrockenmischung außerdem mindestens einen Aktivator und/oder Anreger enthält. Insbesondere kann der Aktivator bzw. Anreger ausgewählt sein aus Alkali und/oder Erdalkali. Dabei hat es sich als vorteilhaft erwiesen, wenn die Baustofftrockenmischung den mindestens einen Aktivator und/oder Anreger in Mengen von 0,1 bis 35 Gew.-%, vorzugsweise 0,2 bis 30 Gew.-%, besonders bevorzugt 0,5 bis 20 Gew.-%, ganz besonders bevorzugt 1 bis 15 Gcw.-%, bezogen auf die Baustofftrockenmischung und insbesondere berechnet als Alkali- und/oder Erdalkalioxid, enthält.

In diesem Zusammenhang ist es möglich, dass der Aktivator und/oder Anreger aus den Inhaltsstoffen der Baustofftrockenmischung selbst stammt, beispielsweise in Form von Verunreinigungen und/oder Nebenprodukten im Fall technischer Ausgangsstoffe. Diese Ausführungsform ist erfindungsgemäß bevorzugt.

Gleichfalls ist es jedoch auch möglich, dass der Aktivator und/oder Anreger als separate Komponente, insbesondere in Form eines Alkali- und/oder Erdalkalisalzes, vorzugsweise Alkalisalzes, bzw. in Form von Alkali- und/oder Erdalkalisilikaten und/oder -gläsern, zugesetzt ist.

Ohne sich auf eine bestimmte Theorie festlegen zu wollen, kann der Effekt des Aktivators bzw. Anregers dadurch erklärt werden, dass die stark alkalischen Anregersubstanzen das Siliciumdioxid- bzw. Aluminiumsilikatnetzwerk, insbesondere des Trasses bzw. des (Meta-)Kaolins, zumindest teilweise lösen und so eine schnellere Hydratation der Bindemittelbestandteile bewirken.

Im Rahmen der vorliegenden Erfindung ist es dabei bevorzugt, wenn der Aktivator bzw. Anreger in Form von Verunreinigungen bzw. Nebenprodukten in technischen Produkten enthalten ist. Ein geeignetes Kaolin/Metakaolin-Produkt mit Alkalianreger wird beispielsweise von der Dennert Poraver GmbH, Schlüsselfeld, Deutschland, unter der Bezeichnung "Metapor^{®}"vertrieben, bei welchem es sich um ein Neben- bzw. Abfallprodukt aus der Blähglasherstellung handelt, Bei der Herstellung von Blähglas wird Kaolin als Trenmnittel verwendet und dabei Temperaturen von ca. 700 °C ausgesetzt, wobei es zu einer teilweisen Umwandlung des Kaolins zu Metakaolin kommt. Das nicht mehr für die Blähglasherstellung verwendbare überschüssige und verunreinigte Trennmittel besteht aus Kaolin, Metakaolin und feinen Glaspartikeln, insbesondere Alkalisilikatglaspartikeln, und wird im Rahmen der vorliegenden Erfindung als zuvor spezifizierte Komponente (b) für die erfindungsgemäße Bindemitteltrockenmischung eingesetzt.

Des Weiteren kann es vorgesehen sein, dass die Baustofftrockenmischung außerdem mindestens ein Additiv, insbesondere mindestens ein Zusatzmittel, enthält. In diesem Zusammenhang kann es insbesondere vorgesehen sein, dass das Additiv ausgewählt ist aus der Gruppe von Verflüssigern, Verdickern, Verzögerern, Beschleunigern, Stabilisierungsmitteln (Stabilisatoren), Rheologiestellmitteln, Zusatzmitteln zur Einstellung des Wasserrückhaltevermögens (Wasserretentionsmitteln), Dispergiermitteln, Dichtungsmitteln, Luftporenbildnern sowie deren Mischungen. Die vorgenannten Zusatzmittel sind dem Fachmann als solche jedoch bekannt; er wird die jeweiligen Zusatzmittel - an den Einzelfall angepasst - auswählen und die einzusetzende Menge jeweils speziell abstimmen.

Unter dem Begriff Zusatzmittel sind im Rahmen der vorliegenden Erfindung insbesondere auch Betonzusatzmittel nach DIN 1045 zu verstehen. Bei Zusatzmitteln handelt es sich um Zusätze, welche durch chemische und/oder physikalische Wirkung die Bindemitteleigenschaften, wie beispielsweise die Verarbeitbarkeit, das Erhärten oder Erstarren, ändern, wobei ihr Volumenanteil am Bindemittelsystem zu vernachlässigen ist, d. h. ihr Volumenanteil beträgt weniger als 5 Vol.-%, bezogen auf das Bindemittelsystem.

Für weitergehende Einzelheiten zu den Begriffen "Zusatzmittel" und "Betonzusatzmittel" kann insbesondere verwiesen werden auf Römpp Chemielexikon, 10. Auflage, Georg Thieme Verlag, Stuttgart/New York, Band 1, 1998, Seite 419, Stichwort: "Betonzusatzmittel", sowie die dort referierte Literatur, deren jeweiliger Inhalt hiermit durch Bezugnahme vollumfänglich eingeschlossen ist.

Weiterhin ist es im Rahmen der vorliegenden Erfindung möglich, dass die Baustofftrockenmischung außerdem mindestens einen Zusatzstoff enthält.

Unter dem Begriff "Zusatzstoff" sind im Rahmen der vorliegenden Erfindung insbesondere auch Betonzusatzstoffe nach DIN 1045 zu verstehen. Bei den Zusatzstoffen handelt es sich um fein aufgeteilte Zusätze, welche bestimmte Bindemitteleigenschaften beeinflussen und als Volumenbestandteil zu berücksichtigen sind. Für weitergehende Einzelheiten zu dem Begriff der "Zusatzstoffe" bzw. "Betonzusatzstoffe" kann insbesondere verwiesen werden auf Römpp Chemielexikon, 10. Auflage, Georg Thieme Verlag, Stuttgart/New York, Band 1, 1998, Seite 419, Stichwort: "Betonzusatzstoffe", sowie die dort referierte Literatur, deren jeweiliger Inhalt hiermit durch Bezugnahme vollumfänglich eingeschlossen ist.

Wenn die erfindungsgemäße Baustofftrockenmischung einen Zusatzstoff enthält, so ist dieser vorzugsweise ausgewählt aus der Gruppe von anorganischen und/oder mineralischen Zusatzstoffen, insbesondere Gesteinsmehlen, Hochofenschlacken, Hüttensanden, Flugaschen und Bentoniten, Sanden, Pigmenten und Farbstoffen sowie deren Mischungen. Die vorgenannten Zusatzstoffe sind dem Fachmann als solche bekannt; er wird die einzelnen Zusatzstoffe - angepasst an den jeweiligen Einzelfall - auswählen und mengenmäßig speziell abstimmen.

Weiterhin ist es im Rahmen der vorliegenden Erfindung möglich, dass die Baustofftrockenmischung außerdem einen Zuschlag enthält, insbesondere ausgewählt aus natürlichen oder künstlichen Gesteinen, Metallen oder Glästern. Die im Rahmen der vorliegenden Erfindung eingesetzten bzw. verwendbaren Zuschläge sind dem Fachmann als solche bekannt; an den jeweiligen Einzelfall angepasst wird er eine entsprechende Auswahl der Zuschläge vornehmen und sie mit den übrigen Komponenten jeweils mengenmäßig speziell abstimmen. Unter dem Begriff "Zuschlag" sind im Rahmen der vorliegenden Erfindung insbesondere Betonzuschläge nach DIN 1045 zu verstehen. Bei Zuschlägen handelt es sich um Füllstoffe mit Korngrößen, die für die jeweilige Bindemittelherstellung geeignet sind. Für weitergehende Einzelheiten zu den Begriffen "Zuschlag" und "Betonzuschlag" kann insbesondere verwiesen werden auf Römpp Chemielexikon, 10. Auflage, Georg Thieme Verlag, Stuttgart/New York, Band 1, 1998, Seiten 419 und 420, Stichwort: "Betonzuschlag", sowie die dort referierte Literatur, deren jeweiliger Inhalt hiermit durch Bezugnahme vollumfänglich eingeschlossen ist.

Wenn die erfindungsgemäße Baustofftrockenmischung einen Zuschlag enthält, ist es möglich, dass der Zuschlag ein Leichtzuschlag, insbesondere mit einer Kornrohdichte von höchstens 2,2 kg/dm³, ist. Es hat sich dabei als vorteilhaft erwiesen, wenn der Leichtzuschlag ausgewählt ist aus der Gruppe von vulkanischem Gestein, Perlit, Vermiculit, Bims, Schaum- und Blähglas, Blähton, Blähschiefer, Styropor, Tuff, Blähglimmer, Lavakies, Lavasand, Schaumkunststoffen und deren Mischungen. Dabei wird es im Rahmen der vorliegenden Erfindung bevorzugt, wenn der Leichtzuschlag Korngrößen von höchstens 3 mm, insbesondere von höchstens 2 mm, aufweist.

Es ist jedoch auch möglich, dass die erfindungsgemäße Baustofftrockenmischung einen Zuschlag aus dichtem Gestein, insbesondere mit einer Kornrohdichte von mindestens 2,2 kg/dm³, vorzugsweise mindestens 2,5 kg/dm³, aufweist. Dabei hat es sich als vorteilhaft erwiesen, wenn der Zuschlag aus dichtem Gestein aus der Gruppe von Quarzsand, Baryt, Magnetit, Hämatit, Metallund Schwermetallschlacken, Flusskies, Flusssand, Splitt, Schotter und deren Mischungen ausgewählt ist. Weiterhin ist es im Rahmen der vorliegenden Erfindung bevorzugt, wenn der Zuschlag aus dichtem Gestein Korngrößen von höchstens 2 mm, insbesondere von höchstens 1 mm, aufweist.

Gleichfalls kann es im Rahmen der vorliegenden Erfindung vorgesehen sein, dass die erfindungsgemäße Baustofftrockenmischung mehrere Zuschläge, insbesondere ausgewählt aus Leichtzuschlag und/oder Schwerzuschlag, aufweist.

Weiterhin kann es im Rahmen der vorliegenden Erfindung vorgesehen sein, dass die Baustofftrockenmischung außerdem Fasern enthält, welche insbesondere ausgewählt sein können aus Kunststoff-Fasern, Metallfasern, Holzfasern und mineralischen Fasern. Fasern können einerseits verwendet werden, um die Dichte der Baustofftrockenmischung bzw. des resultierenden Bindemittels einzustellen, andererseits verleihen sie dem ausgehärteten Bindemittel im Allgemeinen eine höhere Festigkeit und Flexibiltät.

Gemäß einer besonders bevorzugten Ausführungsform der vorliegenden Erfindung ist die Baustofftrockenmischung zementarm und ganz besonders bevorzugt sogar zumindest im Wesentlichen zementfrei. In diesem Zusammenhang ist es erfindungsgemäß vorgesehen, dass die Baustofftrockenmischung weniger als 1 Gew.-%, insbesondere weniger als 0,5 Gew.-%, vorzugsweise weniger als 0,1 Gew.-%, besonders bevorzugt etwa 0 Gew.-%, Zement enthält, bezogen auf die Baustofftrockenmischung.

Im Allgemeinen ist die Baustofftrockenmischung nach der Erfindung zumindest im Wesentlichen frei von Komplex- und Chelatbildner. Dabei hat es sich als besonders vorteilhaft erwiesen, wenn die Baustofftrockenmischung weniger als 0,1 Gew.-%, insbesondere weniger als 0,01 Gew.-%, vorzugsweise etwa 0 Gew.-%, Komplex- und Chelatbildner enthält, bezogen auf die Baustofftrockenmischung.

Weiterhin hat es sich im Rahmen der vorliegenden Erfindung als vorteilhaft erwiesen, wenn mit Ausnahme des Zuschlags 99 % aller übrigen Bestandteile der Baustofftrockenmischung Korngrößen unterhalb von 2.000 µm, insbesondere unterhalb von 1.000 µm, vorzugsweise unterhalb von 750 µm, besonders bevorzugt unterhalb von 500 µm, aufweisen.

Im Allgemeinen weist die Baustofftrockenmischung eine Schüttdichte im Bereich von 800 bis 200 kg/m³, insbesondere 900 bis 1.750 kg/m³, vorzugsweise 1.000 bis 1.600 kg/m³, auf.

Ein weiterer Gegenstand der vorliegenden Erfindung - gemäß einem zweiten Aspekt der vorliegenden Erfindung - ist die Verwendung einer Baustofftrockenmischung, insbesondere einer Bindemitteltrockenmischung, wie zuvor beschrieben, in oder als Bindemittel(n), insbesondere zur Herstellung von Putzen, Mörteln, Bodenmassen, Bodenausgleichsmassen, Estrichen, Spachtel- und Ausgleichsmassen.

Für weitere Einzelheiten zu diesem Erfindungsaspekt kann auf die vorangehenden Ausführungen zu der erfindungsgemäßen Baustofftrockenmischung verwiesen werden, welche in Bezug auf die erfindungsgemäße Verwendung entsprechend gelten.

Weiterer Gegenstand der vorliegenden Erfindung - gemäß einem dritten Aspekt der vorliegenden Erfindung - ist ein Bindemittel, insbesondere ausgewählt aus der Gruppe von Putzen, Mörteln, Bodenmassen, Bodenausgleichsmassen, Estrichen und Spachtel- und Ausgleichsmassen, welches durch Anmachen mit Wasser einer zuvor beschriebenen Baustofftrockenmischung, insbesondere Bindemitteltrockenmischung, erhältlich ist.

Im Allgemeinen ist das erfindungsgemäße Bindemittel durch Anmachen mit Wasser in Mengen von 5 bis 60 Gew.-%, insbesondere 10 bis 50 Gew.-% vorzugsweise 15 bis 45 Gew.-%, bezogen auf das Bindemittel, erhältlich.

Dabei hat es sich im Rahmen der vorliegenden Erfindung als vorteilhaft erwiesen, wenn das Bindemittel einen Wasser/Feststoff-Wert (w/f-Wert) im Bereich von 0,1 bis 0,7, insbesondere 0,2 bis 0,6 aufweist.

Weiterhin ist es im Rahmen der vorliegenden Erfindung bevorzugt, wenn mit dem Bindemittel hergestellte Formkörper nach 28-tägigem Aushärten eine Druckfestigkeit von mindestens 10 N/mm², insbesondere mindestens 11 N/mm², vorzugsweise mindestens 12 N/mm² aufweisen, wobei Druckfestigkeiten von bis zu 50 N/mm² möglich sind.

Für weitere Einzelheiten zu diesem Erfindungsaspekt kann auf die vorangehenden Ausführungen zu den ersten beiden Erfindungsaspekten verwiesen werden, welche in Bezug auf das erfindungsgemäße Bindemittel entsprechend gelten.

Wiederum weiterer Gegenstand der vorliegenden Erfindung - gemäß einem **vierten** Aspekt der vorliegenden Erfindung - ist die Verwendung einer Kombination von (a) Trass einerseits und (b) Kaolin und/oder Metakaolin andererseits zur Erhöhung der Festigkeit, insbesondere Druck- und/oder Biegefestigkeit, von Bindemittelsystemen, insbesondere zementarmen oder zementfreien, insbesondere brannt- und/oder löschkalkbasierten Bindemittelsystemen, wobei der (a) Trass und das (b) Kaolin und/oder Metakaolin in einer Baustofftrockenmischung, wie sie zuvor beschrieben wurde, eingesetzt werden.

Durch die spezielle erfindungsgemäße Kombination von (a) Trass einerseits und (b) Kaolin bzw. Metakaolin andererseits können sowohl die Anfangs- bzw. Frühfestigkeiten als auch die Endfestigkeiten der betreffenden Bindemittelsysteme bedeutend gesteigert werden. Die Erhöhung der Festigkeit bezieht sich insbesondere auf die mit Wasser angemachte und nachfolgend ausgehärtete Bindemittelmischung bzw. auf die hiermit hergestellten Formkörper.

Für weitergehende Einzelheiten zu diesem Erfindungsaspekt kann auf die obigen Ausführungen zu den vorangehenden Erfindungsaspekten verwiesen werden, welche in Bezug auf die erfindungsgemäße Verwendung einer Kombination von Trass einerseits und (Meta-)Kaolin andererseits entsprechend gelten.

Schließlich ist wiederum weiterer Gegenstand der vorliegenden Erfindung - gemäß einem **fünften** Aspekt der vorliegenden Erfindung - ein Verfahren zur Erhöhung der Festigkeit, insbesondere der Druck- und/oder Biegefestigkeit, eines Bindemittelsystems, insbesondere eines zementarmen oder zementfreien, insbesondere brannt- und/oder löschkalkbasierten Bindemittelsystems, wobei dem Bindemittelsystem, insbesondere dem Brannt- und/oder Löschkalk, eine Kombination von (a) Trass einerseits und (b) Kaolin und/oder Metakaolin andererseits zugesetzt wird, wobei der (a) Trass einerseits und das (b) Kaolin und/oder Metakaolin andererseits in einer Baustofftrockenmischung, wie sie zuvor beschrieben wurde, eingesetzt werden.

Dabei hat es sich im Rahmen der vorliegenden Erfindung als besonders vorteilhaft erwiesen, wenn die Kombination von (a) Trass einerseits und (b) Kaolin und/oder Metakaolin andererseits in synergistischen Mengen bzw. in synergistischen (a)/(b)-Mengenverhältnissen zugesetzt wird.

Für weitergehende Einzelheiten zu diesem Erfindungsaspekt kann auf die vorangehenden Ausführungen zu den übrigen Erfindungsaspekten verwiesen werden, welche diesbezüglich entsprechend gelten.

Weitere Ausgestaltungen, Abwandlungen und Variationen sowie Vorteile der vorliegende Beschreibung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch nicht beschränken.

### Ausfübrungsbeispiel I:

### Erfindungsgemäße Rezepturen:

Nachfolgend werden verschiedene Rezepturen von erfindungsgemäßen Baustofftrockenmischungen bzw. Bindemitteltrockenmischungen aufgeführt, welche sich durch Anmachen mit Wasser zu den entsprechenden Bindemitteln, wie Putzen, Mörteln, Bodenmassen, Bodenausgleichsmassen, Estrichen, Spachtel- und Ausgleichsmassen etc., weiterverarbeiten lassen.

Bei den nachfolgenden Rezepturen besteht die Komponente (a) aus einem Trassmehl nach DIN 51043, wie es von der tubag Trass Vertrieb GmbH & Co. KG, Kruft, Deutschland, unter der Bezeichnung "tubag Trassmehl TM" erhältlich ist (Schüttdichte: ca. 0,8 bis 1 kg/l; Rohdichte: ca. 2,5 kg/dm³; spezifische Oberfläche: ca. 5.000 bis 8.000 Blaine).

Die Komponente (b) ist eine Mischung aus Kaolin und Metakaolin mit einem Alkalianreger auf Basis eines Alkalisilikates, wobei diese Mischung unter der Bezeichnung Metapor^{®} von der Dennert Poraver GmbH, Schlüsselfeld, Deutschland, erhältlich ist (Zusammensetzung: Kaolin, Metakaolin und feine Glaspartikel; Dichte: ca. 2.000 bis 2.600 kg/m³; Schüttdichte: 480 ± 90 kg/m³; mineralische Phasen: Amorphe Aluminium/Silicium-Spinellphase, 5 bis 20 Masse-% Glas, Quarz, Mullit und (Kali-)Feldspat).

Als Kalkkomponente wird ein Löschkalk (z. B. natürlich hydraulischer Kalk, wie NHL 2, beispielsweise erhältlich durch die Hessler-Kalkwerke GmbH, Wiesloch, Deutschland) verwendet.

### Rezeptur 1:

35 - 55 Gewichtsteile Löschkalk (Kalkhydrat) (z, B. NHL 2)
15 - 35 Gewichtsteile Komponente (b)
20 - 40 Gewichtsteile Komponente (a)

Diese Rezeptur kann nach Anmachen mit Wasser als Bindemittel eingesetzt werden. Nach Anmachen mit Wasser (w/f-Faktor = 0,55) weist die Mischung ein Ausbreitmaß von 16,1 cm und eine Rohdichte von 1.620 kg/m³ auf.

### Rezeptur 2:

26 - 46 Gewichtsteile Löschkalk (Kalkhydrat) (z. B. NHL 2)
10 - 30 Gewichtsteile Komponente (b)
14 - 34 Gewichtsteile Komponente (a)
15 - 25 Gewichtsteile Quarzsand

Durch Anmachen mit Wasser (w/f-Faktor = 0,44) lässt sich ein Mörtel mit einem Ausbreitmaß von 16,8 cm und einer Rohdichte von 1.707 kg/m³ erhalten.

### Rezeptur 3:

21,5 - 41,5 Gewichtsteile Löschkalk (Kalkhydrat) (z. B. NHL 2)
7,5 - 27,5 Gewichtsteile Komponente (b)
11 - 31,0 Gewichtsteile Komponente (a)
25 - 35 Gewichtsteile Quarzsand

### Rezeptur 4 :

14,75 - 34,75 Gewichtsteile Löschkalk (Kalkhydrat) (z. B. NHL 2)
8,75 - 18,75 Gewichtsteile Komponente (b)
11,5 - 21,5 Gewichtsteile Komponente (a)
35 - 55 Gewichtsteile Quarzsand

Die erfindungsgemäße Rezeptur eignet sich beispielsweise als Mörtel nach Anmachen mit Wasser (w/f-Faktor = 0,31) mit einem Ausbreitmaß von 16,4 cm und einer Rohdichte von 1.929 kg/m³.

### Rezeptur 5:

14,75 - 34,75 Gewichtsteile Löschkalk (Kalkhydrat) (z. B. NHL 2)
8,75 - 18,75 Gewichtsteile Komponente (b)
11,5 - 21,5 Gewichtsteile Komponente (a)
21,75 - 41,75 Gewichtsteile Quarzsand
1 - 10 Gewichtsteile Blähglas (0,25 bis 0,5 mm)
1 - 10 Gewichtsteile Bims (0,3 bis 1,5 mm)
0,1-5 Gewichtsteile Holz- oder Cellulosefasern
0,2 - 5 Gewichtsteile Kunststoffdispersionspulver
0,1 - 1,1 Gewichtsteile Methylcellulose (Wasserretentionsmittel)

Diese Rezeptur eignet sich zur Herstellung von Mörteln oder Spachtelmassen (w/f-Faktor z. B. 0,45) mit einem Ausbreitmaß von 14,0 cm und einer Rohdichte von 1.451 kg/m³.

### Rezeptur 6:

19 - 29 Gewichtsteile Löschkalk (Kalkhydrat) (z. B. NHL 2)
5 - 15 Gewichtsteile Komponente (b)
17 - 27 Gewichtsteile Komponente (a)
5 - 15 Gewichtsteile Blähglas (0,25 bis 0,5 mm)
1 - 10 Gewichtsteile Bims (0,3 bis 1,5 mm)
0,1 - 2 Gewichtsteile Holz- und Cellulosefasern
0,1 bis 0,5 Gewichtsteile Verarbeitungsadditiv
0,1 - 0,5 Gewichtsteile Methylcellulose (Wasserretentionsmittel)
0,1 - 2 Gewichtsteile Dispersionspulver (PVA)

Nach Anmachen mit Wasser (w/f-Faktor 0,57) resultiert eine Bindemittelmischung mit einer Rohdichte von 1.358 kg/m³.

### Rezeptur 7:

10 - 25 Gewichtsteile Löschkalk (Kalkhydrat) (z. B. NHL 2)
10 - 25 Gewichtsteile Komponente (b)
15 - 30 Gewichtsteile Komponente (a)
24,75 - 44,75 Gewichtsteile Quarzsand
1 - 10 Gewichtsteile Blähglas (0,25 bis 0,5 mm)
1 - 10 Gewichtsteiles Bims (0,3 bis 1,5 mm)
0,1 - 5 Gewichtsteile Holz- oder Cellulosefasern
0,1 - 2 Gewichtsteile Methylcellulose (Wasserretentionsmittel)
0,1 - 5 Gewichtsteile Dispersionspulver (PVA)
0,1 - 2 Gewichtsteile CSA-Zement

Nach Anmachen mit Wasser (w/f-Faktor = 0,49) resultiert ein Nassmörtel mit einer Rohdichte von 1.398 kg/m³.

Alle vorgenannten Rezepturen lassen sich nach Anmachen mit Wasser zu Formkörpern, insbesondere Prismen, weiterverarbeiten, welche eine deutlich verbesserte Festigkeit, insbesondere Druckfestigkeit, und zwar sowohl Anfangsfestigkeit (Frühfestigkeit) sowie Endfestigkeit, aufweisen. Die Druckfestigkeiten nach 28 Tagen lagen bei den vorgenannten Rezepturen im Bereich von 3 bis N/mm².

### Ausführungsbeispiele II:

In den nachfolgenden Ausführungsbeispielen wird die synergistische Kombination der Komponente (a) (Trassmehl) einerseits und Komponente (b) (Kaolin und/oder Metakaolin mit inhärentem Alkalianreger) andererseits im Rahmen einer zementfreien Baustoff- bzw. Bindemitteltrockenmischung auf Basis von Kalkhydrat bzw. Löschkalk veranschaulicht.

Wie die nachstehenden Versuche belegen, führt eine Kombination der Komponenten (a) und (b) gegenüber den jeweiligen Komponenten allein zu einer erheblichen bzw. synergistischen Verbesserung der mechanischen Eigenschaften, insbesondere im Hinblick auf die Festigkeiten wie Biegezugfestigkeit und Druckfestigkeit, und zwar sowohl im Rahmen von Anfangsfestigkeiten (Frühfestigkeiten) als auch von Endfestigkeiten.

Die betreffenden Ergebnisse sind in der nachfolgenden Tabelle zusammengefasst:

| Versuchs-Nr. | TrassKomponente (a) | Komponente (b) | Biegezugfestigkeit 14 Tage | Biegezugfestigkeit 28 Tage | Druckfestigkeit 14 Tage (N/mm²) | Druckfestigkeit 28 Tage |
|---|---|---|---|---|---|---|
| | g/% | g/% | (N/mm²) | (N/mm²) | | (N/mm²) |
| I, VB | 720/100 | 0/0 | 1,5 | 2,4 | 4,2 | 6,1 |
| II, VB | 576/80 | 144/20 | 2,3 | 3,3 | 8,0 | 11,3 |
| III | 432/60 | 288/40 | 2,6 | 3,1 | 12,1 | 16,7 |
| IV | 288/40 | 432/60 | 3,3 | 3,7 | 16,8 | 20,6 |
| V | 144/20 | 576/80 | 3,9 | 3,8 | 17,0 | 17,3 |
| VI, VB | 0/0 | 720/100 | 1,2 | 1,6 | 3,8 | 5,0 |

| | | | | | | |
|---|---|---|---|---|---|---|
| VB: Vergleichs beispiel | | | | | | |

Alle vorstehenden Mischungen entsprechend den Versuchs-Nr, I bis VI enthielten 180 Gewichtsteile Kalkhydrat (Löschkalk) sowie 720 Gewichtsteile der Komponente (a) (Versuchs-Nr. I) bzw. 720 Gewichtsteile der Komponente (b) (Versuchs-Nr. VI) bzw. 720 Gewichtsteile der Mischung der Komponenten (a) + (b) (Versuchs-Nr. II bis V).

## Patentansprüche

1. Baustofftrockenmischung, insbesondere Bindemitteltrockenmischung, enthaltend mindestens einen Kalkträger, insbesondere ausgewählt aus Calciumoxid (Branntkalk, CaO) und/oder Calciumhydroxid (Löschkalk, Ca(OH)₂), zusammen mit einer Kombination von (a) Trass einerseits und (b) Kaolin und/oder Metakaolin andererseits, wobei die Baustofftrockenmischung Trass in Mengen von 5 bis 60 Gew.-%, bezogen auf die Baustofftrockenmischung, enthält und wobei die Baustofftrockenmischung weniger als 1 Gew.-% Zement enthält.

2. Baustofftrockenmischung nach Anspruch 1, **dadurch gekennzeichnet,**
**dass** die Baustofftrockenmischung Calciumoxid und/oder Calciumhydroxid in Mengen von 5 bis 80 Gew.-%, insbesondere 10 bis 70 Gew.-%, vorzugsweise 15 bis 60 Gew.-%, besonders bevorzugt 20 bis 55 Gew.-%, bezogen auf die Baustofftrockenmischung, enthält und/oder
**dass** die Baustofftrockenmischung Trass in Mengen von 7,5 bis 50 Gew.-%, vorzugsweise 10 bis 45 Gew.-%, besonders bevorzugt 15 bis 35 Gew.-%, bezogen.auf die Baustofftrockenmischung, enthält und/oder
**dass** die Baustofftrockenmischung Kaolin und/oder Metakaolin in Mengen von 5 bis 65 Gew.-%, insbesondere 7,5 bis 60 Gew.-%, vorzugsweise 10 bis 55 Gew.-%, besonders bevorzugt 12,5 bis 50 Gew.-%, bezogen auf die Baustofftrockenmischung, enthält und/oder
**dass** die Baustofftrockenmischung die Kombination von Trass einerseits und Kaolin und/oder Metakaolin andererseits in Mengen von 5 bis 95 Gew.-%, insbesondere 10 bis 90 Gew.-%, vorzugsweise 15 bis 85 Gew.%, besonders bevorzugt 20 bis 80 Gew.-%, ganz besonders bevorzugt 30 bis 70 Gew.-%, bezogen auf die Baustofftrockenmischung, enthält.

3. Baustofftrockenmischung nach Anspruch 1 oder 2, **dadurch gekennzeichnet, dass** die Baustofftrockenmischung die Kombination von (a) Trass einerseits und (b) Kaolin und/oder Metakaolin andererseits in einem Gewichtsverhältnis von (a) / (b) im Bereich von 10:90 bis 90 : 10, insbesondere 15 : 85 bis 85: 15, vorzugsweise 20: 80 bis 80 : 20, besonders bevorzugt 30 : 70 bis 70 : 30, enthält.

4. Baustofftrockenmischung nach einem der vorangehenden Ansprüche, **dadurch gekennzeichnet,**
**dass** das Calciumoxid (Branntkalk, CaO) und/oder Calciumhydroxid (Löschkalk, Ca(OH)₂) eine spezifische Oberfläche nach Blaine von mindestens 1.000 cm²/g, insbesondere im Bereich von 1.000 bis 8.000 cm²/g, vorzugsweise im Bereich von 1.500 bis 6.000 cm²/g, besonders bevorzugt im Bereich von 2.000 bis 5.000 cm²/g, aufweist und/oder
**dass** das Calciumoxid und/oder Calciumhydroxid eine mittlere Korngröße im Bereich von 1 bis 250 µm, insbesondere im Bereich von 5 bis 200 µm, vorzugsweise im Bereich von 10 bis 150 µm, aufweist.

5. Baustofftrockenmischung nach einem der vorangehenden Ansprüche, **dadurch gekennzeichnet,**
**dass** der Trass in Form von Trassmehl vorliegt und/oder
**dass** der Trass eine spezifische Oberfläche nach Blaine von mindestens 5.000 cm²/g, insbesondere im Bereich von 5.000 bis 10.000 cm²/g, vorzugsweise im Bereich von 5.100 bis 8.000 cm²/g, besonders bevorzugt im Bereich von 5.200 bis 6.000 cm²/g, aufweist und/oder
**dass** der Trass eine mittlere Korngröße im Bereich von 5 bis 100 µm, insbesondere im Bereich von 7,5 bis 75 µm, vorzugsweise im Bereich von 10 bis 50 µm, aufweist und/oder
**dass** der Trass einen D50-Wert im Bereich von 1 bis 50 µm, insbesondere im Bereich von 2,5 bis 40 µm, vorzugsweise im Bereich von 5 bis 30 µm, aufweist und/oder dass der Trass einen D90-Wert im Bereich von 10 bis 80 µm, insbesondere im Bereich von 20 bis 60 µm, vorzugsweise im Bereich von 25 bis 50 µm, aufweist.

6. Baustofftrockenmischung nach einem der vorangehenden Ansprüche, **dadurch gekennzeichnet,**
**dass** das Kaolin und/oder Metakaolin eine spezifische Oberfläche, insbesondere nach Blaine, von mindestens 2.000 cm²/g, insbesondere im Bereich von 2.000 bis 8.000 cm²/g, vorzugsweise im Bereich von 2.100 bis 5.000 cm²/g, besonders bevorzugt im Bereich von 2.200 bis 4.000 cm²/g, aufweist und/oder
**dass** das Kaolin und/oder Metakaolin eine mittlere Korngröße im Bereich von 5 bis 90 µm, insbesondere im Bereich von 7,5 bis 50 µm, vorzugsweise im Bereich von 10 bis 40 µm, aufweist und/oder
**dass** das Kaolin und/oder Metakaolin einen D50-Wert im Bereich von 2 bis 40 µm, insbesondere im Bereich von 5 bis 30 µm, vorzugsweise im Bereich von 7,5 bis 25 µm,
aufweist und/oder
**dass** das Kaolin und/oder Metakaolin einen D90-Wert im Bereich von 5 bis 70 µm, insbesondere im Bereich von 10 bis 60 µm, vorzugsweise im Bereich von 20 bis 50 µm,
aufweist.

7. Baustofftrockenmischung nach einem der vorangehenden Ansprüche, **dadurch gekennzeichnet, dass** der Trass, jeweils bezogen auf den Trass, Siliciumdioxid (SiO₂) in Mengen von 50 bis 75 Gew.-% und/oder Aluminiumoxid (Al₂O₃) in Mengen von 10 bis 25 Gew.-% und/oder Calcium- und/oder Magnesiumoxid in Mengen von bis zu 15 Gew.-% und/oder Alkali, berechnet als Natrium- und/oder Kaliumoxid, in Mengen von bis zu 10 Ges.-% enthält.

8. Baustofftrockenmischung nach einem der vorangehenden Ansprüche, **dadurch gekennzeichnet, dass** die Baustofftrockenmischung außerdem mindestens einen Aktivator und/oder Anreger, ausgewählt aus Alkali und/oder Erdalkali, enthält, insbesondere in Mengen von 0,1 bis 35 Gew.-%, vorzugsweise 0,2 bis 30 Gew.-%, besonders bevorzugt 0,5 bis 20 Gew.-%, ganz besonders bevorzugt 1 bis 15 Gew.-%, bezogen auf die Baustofftrockenmischung und insbesondere berechnet als Alkali- und/oder Erdalkalioxid, insbesondere wobei der Aktivator und/oder Anreger aus den Inhaltsstoffen der Baustofftrockenmischung selbst stammen kann, insbesondere in Form von Verunreinigungen und/oder Nebenprodukten im Fall technischer Ausgangsstoffe, und/oder insbesondere wobei der Aktivator und/oder Anreger als separate Komponente, insbesondere in Form eines Alkali- und/oder Erdalkalisalzes, vorzugsweise Alkalisalzes, und/oder in Form von Alkali- und/oder Erdalkalisilikaten und/oder -gläsern, zugesetzt ist.

9. Baustofftrockenmischung nach einem der vorangehenden Ansprüche, **dadurch gekennzeichnet, dass** die Baustofftrockenmischung außerdem mindestens ein Additiv enthält, ausgewählt aus der Gruppe von Verflüssigern, Verdickern, Verzögerern, Beschleunigern, Stabilisierungsmitteln (Stabilisatoren), Rheologiestellmitteln, Zusatzmitteln zur Einstellung des Wasserrückhaltevermögens (Wasserretentionsmitteln), Dispergiermitteln, Dichtungsmitteln, Luftporenbildnern sowie deren Mischungen.

10. Baustofftrockenmischung nach einem der vorangehenden Ansprüche, **dadurch gekennzeichnet, dass** die Baustofftrockenmischung außerdem mindestens einen Zusatzstoff aus der Gruppe von anorganischen und/oder mineralischen Zusatzstoffen, insbesondere Gesteinsmehlen, Hochofenschlacken, Hüttensanden, Flugaschen und Bentoniten, Sanden, Pigmenten und Farbstoffen sowie deren Mischungen enthält.

11. Baustofftrockenmischung nach einem der vorangehenden Ansprüche, **dadurch gekennzeichnet, dass** die Baustofftrockenmischung außerdem mindestens einen Zuschlag enthält, ausgewählt aus natürlichen oder künstlichen Gesteinen, Metallen oder Gläsern, insbesondere wobei der Zuschlag ein Leichtzuschlag mit einer Kornrohdichte von höchstens 2,2 kg/dm³ ist, insbesondere ausgewählt aus der Gruppe von vulkanischem Gestein, Perlit, Vermiculit, Bims, Schaum- und Blähglas, Blähton, Blähschiefer, Styropor, Tuff, Blähglimmer, Lavakies, Lavasand, Schaumkunststoffen und deren Mischungen und/oder insbesondere mit Korngrößen von höchstens 3 mm, insbesondere höchstens 2 mm, und/oder
insbesondere wobei der Zuschlag ein Zuschlag aus dichtem Gestein mit einer Kornrohdichte von mindestens 2,2 kg/dm³, vorzugsweise mindestens 2,5 kg/dm³, ist, insbesondere ausgewählt aus der Gruppe von Quarzsand, Baryt, Magnetit, Hämatit, Metall- und Schwermetallschlacken, Flusskies, Flusssand, Splitt, Schotter und deren Mischungen und/oder insbesondere mit Korngrößen von höchstens 2 mm, insbesondere höchstens 1 mm.

12. Baustofftrockenmischung nach einem der vorangehenden Ansprüche, **dadurch gekennzeichnet, dass** die Baustofftrockenmischung außerdem Fasern enthält, ausgewählt aus Kunststoff-Fasern, Metallfasern, Holzfasern und mineralischen Fasern.

13. Baustofftrockenmischung nach einem der vorangehenden Ansprüche, **dadurch gekennzeichnet,**
**dass** die Baustofftrockenmischung weniger als 0,5 Gew.-%, vorzugsweise weniger als 0,1 Gew.-%, Zement enthält, bezogen auf die Baustofftrockenmischung, und/oder dass die Baustofftrockenmischung zumindest im Wesentlichen frei ist von Komplex- und Chelatbildnern, insbesondere wobei die Baustofftrockenmischung weniger als 0,1 Gew.-%, insbesondere weniger als 0,01 Gew.-%, Komplex- und Chelatbildner enthält, bezogen auf die Baustofftrockenmischung.

14. Baustofftrockenmischung nach einem der vorangehenden Ansprüche, **dadurch gekennzeichnet, dass** mit Ausnahme des Zuschlags 99 % aller übrigen Bestandteile der Baustofftrockenmischung Korngrößen unterhalb von 2.000 µm, insbesondere unterhalb von 1.000 µm, vorzugsweise unterhalb von 750 µm, besonders bevorzugt unterhalb von 500 µm, aufweisen.

15. Baustofftrockenmischung nach einem der vorangehenden Ansprüche, **dadurch gekennzeichnet, dass** die Baustofftrockenmischung eine Schüttdichte im Bereich von 800 bis 2.000 kg/m³, insbesondere 900 bis 1.750 kg/m³, vorzugsweise 1.000 bis 1.600 kg/m³, aufweist.

16. Verwendung einer Baustofftrockenmischung, insbesondere Bindemitteltrockenmischung, gemäß einem der vorangehenden Ansprüche in oder als Bindemitteln, insbesondere zur Herstellung von Putzen, Mörteln, Bodenmassen, Bodenausgleichsmassen, Estrichen und Spachtel- und Ausgleichsmassen.

17. Bindemittel, insbesondere ausgewählt aus der Gruppe von Putzen, Mörteln, Bodenmassen, Bodenausgleichsmassen, Estrichen und Spachtel- und Ausgleichsmassen, erhältlich durch Anmachen mit Wasser einer Baustofftrockenmischung, insbesondere Bindemitteltrockenmischung, gemäß einem der vorangehenden Ansprüche.

18. Bindemittel nach Anspruch 17, **dadurch gekennzeichnet,**
**dass** das Bindemittel durch Anmachen mit Wasser in Mengen von 5 bis 60 Gew.-%, insbesondere 10 bis 50 Gew.-%, vorzugsweise 15 bis 45 Gew.-%, bezogen auf das Bindemittel, erhältlich ist und/oder
**dass** das Bindemittel einen Wasser/Feststoff-Wert (w/f-Wert) im Bereich von 0,1 bis 0,7, insbesondere 0,2 bis 0,6, aufweist und/oder
**dass** mit dem Bindemittel hergestellte Formkörper nach 28-tägigem Aushärten eine Druckfestigkeit von mindestens 10 N/mm², insbesondere mindestens 11 N/mm², vorzugsweise mindestens 12 N/mm², und/oder bis zu 50 N/mm² aufweisen.

19. Verwendung einer Kombination von (a) Trass einerseits und (b) Kaolin und/oder Metakaolin andererseits zur Erhöhung der Festigkeit, insbesondere Druck- und/oder Biegefestigkeit, von Bindemittelsystemen, insbesondere zementfreien, insbesondere brannt- und/oder löschkalkbasierten Bindemittelsystemen, wobei der (a) Trass einerseits und das (b) Kaolin und/oder Metakaolin andererseits in einer Baustofftrockenmischung nach einem der Ansprüche 1 bis 15 eingesetzt werden.

20. Verfahren zur Erhöhung der Festigkeit, insbesondere Druck- und/oder Biegefestigkeit, eines Bindemittelsystems, insbesondere eines zementfreien, insbesondere brannt- und/oder löschkalkbasierten Bindemittelsystems, wobei dem Bindemittelsystem, insbesondere dem Brannt- und/oder Löschkalk, eine Kombination von (a) Trass einerseits und (b) Kaolin und/oder Metakaolin andererseits zugesetzt wird, wobei der (a) Trass einerseits und das (b) Kaolin und/oder Metakaolin andererseits in einer Baustofftrockenmischung nach einem der Ansprüche 1 bis 15 eingesetzt werden.

## Claims

1. Building material dry mixture, in particular, a binding material dry mixture containing at least one lime carrier, in particular selected from calcium oxide (quicklime, CaO) and/or calcium hydroxide (slaked lime, Ca(OH)₂), together with a combination of (a) trass on the one hand, and (b) kaolin and/or metakaolin on the other hand, wherein the building material dry mixture contains trass in amounts of from 5 to 60 wt.-%, based on the building material dry mixture, and wherein the building material dry mixture contains less than 1 wt.-% cement.

2. Building material dry mixture according to claim 1, **characterized in that**
the building material dry mixture contains calcium oxide and/or calcium hydroxide in amounts of 5 to 80 wt.-%, especially 10 to 70 wt.-%, preferably 15 to 60 wt.-%, particularly preferably 20 to 55 wt.-%, based on the building material dry mixture, and/or
the building material dry mixture contains trass in amounts of 7.5 to 50 wt.-%, preferably 10 to 45 wt.-%, particularly preferably 15 to 35 wt.-%, based on the building material dry mixture, and/or
the building material dry mixture contains kaolin and/or metakaolin in amounts of 5 to 65 wt.-%, in particular 7.5 to 60 wt.%, preferably 10 to 55 wt.-%, particularly preferably 12.5 to 50 wt.-%, based on the building material dry mixture, and/or
the building material dry mixture contains the combination of trass one hand, and kaolin and/or metakaolin on the other hand, in amounts of 5 to 95 wt.-%, especially 10 to 90 wt.-%, preferably 15 to 85 wt.-%, particularly preferably 20 to 80 wt.-%, most preferably 30 to 70 wt.-%, based on the building material dry mixture.

3. Building material dry mixture according to claim 1 or 2,
**characterized in that**
the building material dry mixture contains the combination of (a) trass on the one hand, and (b) kaolin and/or metakaolin on the other hand, in a weight ratio of (a) / (b) in the range of 10 : 90 to 90 : 10, in particular 15 : 85 to 85 : 15, preferably 20 : 80 to 80 : 20, particularly preferably 30 : 70 to 70 : 30.

4. Building material dry mixture according to any one of the preceding claims,
**characterized in that**
the calcium oxide (quicklime, CaO) and/or calcium hydroxide (slaked lime, Ca(OH)₂) comprises a specific surface area according to Blaine of at least 1000 cm²/g, in particular in the range of 1000 to 8000 cm²/g, preferably in the range of 1500 to 6000 cm²/g, more preferably in the range of 2000 to 5000 cm²/g, and/or
the calcium oxide and/or calcium hydroxide have an average particle size in the range of 1 to 250 µm, in particular in the range of 5 to 200 µm, preferably in the range 10 to 150 µm.

5. Building material dry mixture according to any one of the preceding claims,
**characterized in that**
the trass is in the form of trass powder and/or
the trass comprises a specific surface area according to Blaine of at least 5000 cm²/g, in particular in the range of 5000 to 10000 cm²/g, preferably in the range 5100 to 8000 cm²/g, more preferably in the range 5200 to 6000 cm²/g, and/or
the trass has an average particle size in the range of 5 to 100 µm, in particular in the range of 7.5 to 75 µm, preferably in the range of 10 to 50 µm, and/or
the trass has a D50 value in the range of 1 to 50 µm, in particular in the range 2.5 to 40 µm, preferably in the range of 5 to 30 µm, and/or
the trass has a D90 value in the range of 10 to 80 µm, in particular in the range of 20 to 60 µm, preferably in the range of 25 to 50 µm.

6. Building material dry mixture according to any one of the preceding claims,
**characterized in that**
the kaolin and/or metakaolin has a specific surface area especially according to Blaine, of at least 2000 cm²/g, particularly in the range of 2000 to 8000 cm²/g, preferably in the range of 2100 to 5000 cm²/g, more preferably in the range of 2200 to 4000 cm²/g, and/or
the kaolin and/or metakaolin has an average particle size in the range of 5 to 90 µm, in particular in the range of 7.5 to 50 µm, preferably in the range of 10 to 40 µm, and/or
the kaolin and/or metakaolin has a D50 value in the range of 2 to 40 µm, in particular in the range of 5 to 30 µm, preferably in the range of 7.5 to 25 µm, and/or
the kaolin and/or metakaolin has a D90 value in the range of 5 to 70 µm, in particular in the range of 10 to 60 µm, preferably in the range of 20 to 50 µm.

7. Building material dry mixture according to any one of the preceding claims,
**characterized in that**
the trass contains silica (SiO₂) in amounts of 50 to 75 wt.-% and/or aluminum oxide (Al₂O₃) in amounts of 10 to 25 wt.-%, and/or calcium and/or magnesium oxide in amounts of up to 15 wt.-%, and/or alkali, calculated as sodium and/or potassium oxide, in amounts of up to 10% wt.-%, each based on the trass.

8. Building material dry mixture according to any one of the preceding claims,
**characterized in that**
the building material dry mixture further comprises at least an activator and/or stimulator selected from alkali and/or alkaline earth containing in particular amounts of 0.1 to 35 wt.-%, preferably 0.2 to 30 wt.-%, particularly preferably 0.5 to 20 wt.-%, most preferably from 1 to 15 wt.-%, based on the building material dry mixture and in particular calculated as the alkali and/or alkaline earth oxide,
in particular wherein the activator and/or stimulator can be derived from the constituents of the building material dry mixture itself, particularly in the form of impurities and/or byproducts in the case of technical raw materials, and/or in particular wherein the activator and/or stimulator is added as a separate component, in particular in the form of an alkali and/or alkaline earth metal salt, preferably an alkali salt, and/or in the form of an alkali and/or alkaline earth silicate and/or glasses.

9. Building material dry mixture according to one of the preceding claims,
**characterized in that**
the building material dry mixture also contains at least an additive selected from the group of liquefiers, thickeners, retarders, accelerators, stabilizing agents (stabilizers), rheology suspending agents, additives for adjusting the water retention capacity (water retention agents), dispersing agents, sealants, air-entraining agents and mixtures thereof.

10. Building material dry mixture according to one of the preceding claims,
**characterized in that**
the building material dry mixture also contains at least one additive selected from the group of inorganic and/or mineral additives, especially rock powder, blast furnace slag, slag sand, fly ash and bentonite, sands, pigments and dyes, and mixtures thereof.

11. Building material dry mixture according to one of the preceding claims,
**characterized in that**
the building material dry mixture also contains at least one additive selected from natural or artificial rocks, metals or glasses,
in particular wherein the additive is a lightweight aggregate with a particle density of not more than 2.2 kg/dm³, in particular selected from the group of volcanic rock, perlite, vermiculite, pumice, foam and expanded glass, expanded clay, expanded shale, polystyrene, tuff, expanded mica, cinders, lava sand, foam plastics and mixtures thereof and/or, in particular with particle sizes of at most 3 mm, in particular at most 2 mm, and/or
in particular where the additive is an additive of dense rocks with a particle density of at least 2.2 kg/dm³, preferably at least 2.5 kg/dm³, in particular selected from the group of quartz sand, barytes, magnetite, hematite, metal and heavy metal slags, river gravel, river sand, gravel, crushed stone and mixtures thereof and/or in particular with particle sizes of not more than 2 mm, in particular at most 1 mm.

12. Building material dry mixture according to one of the preceding claims,
**characterized in that**
the building material dry mixture further comprises fibers selected from synthetic fibers, metal fibers, wood fibers and mineral fibers.

13. Building material dry mixture according to one of the preceding claims,
**characterized in that**
the building material dry mixture contains less than 0.5 wt.%, preferably less than 0.1 wt.-%, cement based on the building material dry mixture, and/or
the building material dry mixture is at least substantially free of complexing and chelating agents, in particular wherein the building material dry mixture contains less than 0.1 wt.%, in particular less than 0.01 wt.-%, of complexing and chelating agents, based on the building material dry mixture.

14. Building material dry mixture according to one of the preceding claims,
**characterized in that**
with the exception of the additive, 99% of all the remaining constituents of the building material dry mixture have particle sizes below 2000 µm, in particular below 1000 µm, preferably below 750 µm, more preferably below 500 µm.

15. Building material dry mixture according to one of the preceding claims,
**characterized in that**
the building material dry mixture has a bulk density in the range of 800 to 2000 kg/m³, in particular 900 to 1750 kg/m³, preferably 1000 to 1600 kg/m³.

16. Use of a building material dry mixture, in particular, a binding material dry mixture according to one of the preceding claims, in or as a binding agent, in particular to produce plasters, mortars, soil compositions, floor leveling compounds, screeds and filling agents.

17. Binding agent, in particular selected from the group of plasters, mortars, soil compositions, floor leveling compounds, screeds and filling agents, obtainable by mixing a building material dry mixture with water, in particular, a binding material dry mixture according to one of the preceding claims.

18. Binding agent according to claim 17,
**characterized in that**
the binding agent is obtainable by mixing it with water in amounts of from 5 to 60 wt.-%, especially 10 to 50 wt.-%, preferably 15 to 45 wt.-%, based on the binding agent, and/or
the binding agent has a water/solids ratio (w/s value) in the range of 0.1 to 0.7, in particular 0.2 to 0.6, and/or
the moldings produced with the binding agent after 28 days of hardening preferably exhibit a compressive strength of at least 10 N/mm², in particular at least 11 N/mm², preferably at least 12 N/mm², and/or up to 50 N/mm².

19. Use of a combination of (a) trass on the one hand, and (b) kaolin and/or metakaolin on the other hand to increase the strength, in particular the compressive and/or flexural strength, of binding agent systems, in particular cement-free, in particular quicklime and/or slaked lime based binding agent systems, wherein the (a) trass on the one hand and the (b) kaolin and/or metakaolin on the other hand, is used in a building material dry mixture according to any one of claims 1 to 15.

20. Method for increasing the strength, particularly compressive and/or flexural strength, of a binding agent system, in particular a cement-free quicklime and/or slaked lime based binding agent system, wherein a combination of (a) trass on the one hand, and (b) kaolin and/or metakaolin on the other hand is added to the binding agent system, in particular a quicklime and/or slaked lime based binding agent system, wherein the (a) trass on the one hand and the (b) kaolin and/or metakaolin on the other hand is added to a building material dry mixture according to any one of claims 1 to 15.

## Revendications

1. Mélange sec de matériaux de construction, en particulier mélange sec de liants, contenant au moins un porteur de chaux, choisi en particulier parmi l'oxyde de calcium (chaux vive, CaO) et/ou l'hydroxyde de calcium (chaux éteinte, Ca(OH)₂), ensemble avec une combinaison (a) d'une part de trass, et (b) d'autre part de kaolin et/ou de métakaolin, le mélange sec de matériaux de construction contenant le trass en des quantités de 5 à 60 % en poids, par rapport au mélange sec de matériaux de construction, et le mélange sec de matériaux de construction contenant moins de 1 % en poids de ciment.

2. Mélange sec de matériaux de construction selon la revendication 1, **caractérisé**
**en ce que** le mélange sec de matériaux de construction contient de l'oxyde de calcium et/ou de l'hydroxyde de calcium en des quantités de 5 à 80 % en poids, en particulier de 10 à 70 % en poids, de préférence de 15 à 60 % en poids, d'une manière particulièrement préférée de 20 à 55 % en poids, par rapport au mélange sec de matériaux de construction, et/ou
**en ce que** le mélange sec de matériaux de construction contient du trass en des quantités de 7,5 à 50 % en poids, de préférence de 10 à 45 % en poids, d'une manière particulièrement préférée de 15 à 35 % en poids, par rapport au mélange sec de matériaux de construction, et/ou
**en ce que** le mélange sec de matériaux de construction contient du kaolin et/ou du métakaolin en des quantités de 5 à 65 % en poids, en particulier de 7,5 à 60 % en poids, de préférence de 10 à 55 % en poids, d'une manière particulièrement préférée de 12,5 à 50 % en poids, par rapport au mélange sec de matériaux de construction, et/ou
**en ce que** le mélange sec de matériaux de construction contient la combinaison d'une part de trass et d'autre part de kaolin et/ou de métakaolin en des quantités de 5 à 95 % en poids, en particulier de 10 à 90 % en poids, de préférence de 15 à 85 % en poids, d'une manière particulièrement préférée de 20 à 80 % en poids, d'une manière tout particulièrement préférée de 30 à 70 % en poids, par rapport au mélange sec de matériaux de construction.

3. Mélange sec de matériaux de construction selon la revendication 1 ou 2, **caractérisé en ce que** le mélange sec de matériaux de construction contient la combinaison (a) d'une part de trass et (b) d'autre part de kaolin et/ou de métakaolin selon une proportion pondérale (a)/(b) dans la plage de 10:90 à 90:10, en particulier de 15:85 à 85:15, de préférence de 20:80 à 80:20, d'une manière particulièrement préférée de 30:70 à 70:30.

4. Mélange sec de matériaux de construction selon l'une des revendications précédentes, **caractérisé**
**en ce que** l'oxyde de calcium (chaux vive, CaO) et/ou l'hydroxyde de calcium (chaux éteinte, Ca(OH)₂) présente une aire spécifique selon Blaine d'au moins 1000 cm²/g, en particulier dans la plage de 1000 à 8000 cm²/g, de préférence dans la plage de 1500 à 6000 cm²/g, d'une manière particulièrement préférée dans la plage de 2000 à 5000 cm²/g, et/ou
**en ce que** l'oxyde de calcium et/ou l'hydroxyde de calcium présentent une granulométrie moyenne dans la plage de 1 à 250 µm, en particulier dans la plage de 5 à 200 µm, de préférence dans la plage de 10 à 150 µm.

5. Mélange sec de matériaux de construction selon l'une des revendications précédentes, **caractérisé**
**en ce que** le trass se présente sous forme de farine de trass, et/ou
**en ce que** le trass présente une aire spécifique selon Blaine d'au moins 5000 cm²/g, en particulier dans la plage de 5000 à 10 000 cm²/g, de préférence dans la plage de 5100 à 8000 cm²/g, d'une manière particulièrement préférée dans la plage de 5200 à 6000 cm²/g, et/ou
**en ce que** le trass présente une granulométrie moyenne dans la plage de 5 à 100 µm, en particulier dans la plage de 7,5 à 75 µm, de préférence dans la plage de 10 à 50 µm, et/ou
**en ce que** le trass présente un D50 dans la plage de 1 à 50 µm, en particulier dans la plage de 2,5 à 40 µm, de préférence dans la plage de 5 à 30 µm, et/ou
**en ce que** le trass présente un D90 dans la plage de 10 à 80 µm, en particulier dans la plage de 20 à 60 µm, de préférence dans la plage de 25 à 50 µm.

6. Mélange sec de matériaux de construction selon l'une des revendications précédentes, **caractérisé**
**en ce que** le kaolin et/ou le métakaolin présente une aire spécifique, en particulier selon Blaine, d'au moins 2000 cm²/g, en particulier dans la plage de 2000 à 8000 cm²/g, de préférence dans la plage de 2100 à 5000 cm²/g, d'une manière particulièrement préférée dans la plage de 2200 à 4000 cm²/g, et/ou
**en ce que** le kaolin et/ou le métakaolin présentent une granulométrie moyenne dans la plage de 5 à 90 µm, en particulier dans la plage de 7,5 à 50 µm, de préférence dans la plage de 10 à 40 µm, et/ou
**en ce que** le kaolin et/ou le métakaolin présentent un D50 dans la plage de 2 à 40 µm, en particulier dans la plage de 5 à 30 µm, de préférence dans la plage de 7,5 à 25 µm, et/ou
**en ce que** le kaolin et/ou le métakaolin présentent un D90 dans la plage de 5 à 70 µm, en particulier dans la plage de 10 à 60 µm, de préférence dans la plage de 20 à 50 µm.

7. Mélange sec de matériaux de construction selon l'une des revendications précédentes, **caractérisé en ce que** le trass contient, dans chaque cas par rapport au trass, du dioxyde de silicium (SiO₂) en des quantités de 50 à 75 % en poids et/ou de l'oxyde d'aluminium (Al₂O₃) en des quantités de 10 à 25 % en poids et/ou de l'oxyde de calcium et/ou de magnésium en des quantités allant jusqu'à 15 % en poids et/ou un métal alcalin, exprimé en oxyde de sodium et/ou de potassium, en des quantités allant jusqu'à 10 % en poids.

8. Mélange sec de matériaux de construction selon l'une des revendications précédentes, **caractérisé en ce que** le mélange sec de matériaux de construction contient en outre au moins un activateur et/ou une matière active, choisis parmi les métaux alcalins et/ou alcalino-terreux, en particulier en des quantités de 0,1 à 35 % en poids, de préférence de 0,2 à 30 % en poids, d'une manière particulièrement préférée de 0,5 à 20 % en poids, d'une manière tout particulièrement préférée de 1 à 15 % en poids, par rapport au mélange sec de matériaux de construction et en particulier exprimé en oxyde d'un métal alcalin et/ou alcalino-terreux,
en particulier dans lequel l'activateur et/ou la matière active peuvent provenir des constituants du mélange sec de matériaux de construction proprement dit, en particulier sous forme d'impuretés et/ou de sous-produits dans le cas des matières premières techniques, et en particulier dans lequel l'activateur et/ou la matière active sont ajoutés sous forme de composants distincts, en particulier sous forme d'un sel d'un métal alcalin et/ou alcalino-terreux, de préférence d'un sel d'un métal alcalin, et/ou sous forme de silicates de métaux alcalins et/ou alcalino-terreux et/ou de verres aux métaux alcalins et/ou alcalino-terreux.

9. Mélange sec de matériaux de construction selon l'une des revendications précédentes, **caractérisé en ce que** le mélange sec de matériaux de construction contient en outre au moins un additif choisi dans le groupe des plastifiants-réducteurs d'eau, des épaississants, des retardateurs de prise, des accélérateurs de prise, des agents de stabilisation (stabilisants), des agents d'ajustement de la rhéologie, des adjuvants pour ajuster le pouvoir de rétention d'eau (rétenteurs d'eau), des dispersants, des hydrofuges de masse, des entraîneurs d'air et des mélanges de ceux-ci.

10. Mélange sec de matériaux de construction selon l'une des revendications précédentes, **caractérisé en ce que** le mélange sec de matériaux de construction contient en outre au moins un adjuvant du groupe des adjuvants inorganiques et/ou minéraux, en particulier des farines de pierre, des laitiers de hauts fourneaux, des sables de laitier, des cendres volantes et des bentonites, des sables, des pigments et des colorants, ainsi que des mélanges de ceux-ci.

11. Mélange sec de matériaux de construction selon l'une des revendications précédentes, **caractérisé en ce que** le mélange sec de matériaux de construction contient en outre au moins un granulat choisi parmi les pierres naturelles ou artificielles, les métaux ou les verres,
en particulier dans lequel le granulat est un granulat léger présentant une masse volumique apparente des grains d'au plus 2,2 kg/dm³, choisi en particulier dans le groupe des roches volcaniques, de la perlite, de la vermiculite, de la pierre ponce, du verre mousse et du verre soufflé, de l'argile expansée, de l'ardoise expansée, du Styropor, du tuff, du mica expansé, du gravier à lave, du sable de lave, des plastiques expansés et des mélanges de ceux-ci, et/ou ayant en particulier une granulométrie d'au plus 3 mm, en particulier d'au plus 2 mm, et/ou
en particulier dans lequel le granulat est un granulat de roche dense, ayant une masse volumique apparente des grains d'au moins 2,2 kg/dm³, de préférence d'au moins 2,5 kg/dm³, choisi en particulier dans le groupe du sable quartzeux, de la baryte, de la magnétite, de l'hématite, des scories de métaux et de métaux lourds, du gravier de rivière, du sable de rivière, des gravillons, des pierrailles et des mélanges de ceux-ci, et/ou ayant en particulier une granulométrie d'au plus 2 mm, en particulier d'au plus 1 mm.

12. Mélange sec de matériaux de construction selon l'une des revendications précédentes, **caractérisé en ce que** le mélange sec de matériaux de construction contient en outre des fibres, choisies parmi les fibres plastiques, les fibres métalliques, les fibres de bois et les fibres minérales.

13. Mélange sec de matériaux de construction selon l'une des revendications précédentes, **caractérisé**
**en ce que** le mélange sec de matériaux de construction contient moins de 0,5 % en poids, de préférence moins de 0,1 % en poids de ciment, par rapport au mélange sec de matériaux de construction, et/ou
**en ce que** le mélange sec de matériaux de construction est au moins pour l'essentiel exempt de complexants et de chélatants, en particulier le mélange sec de matériaux de construction contenant moins de 0,1 % en poids, en particulier moins de 0,01 % en poids, de complexants et de chélatants, par rapport au mélange sec de matériaux de construction.

14. Mélange sec de matériaux de construction selon l'une des revendications précédentes, **caractérisé en ce que**, à l'exception du granulat, 99 % de tous les autres constituants du mélange sec de matériaux de construction présentent une granulométrie inférieure à 2000 µm, en particulier inférieure à 1000 µm, de préférence inférieure à 750 µm, d'une manière particulièrement préférée inférieure à 500 µm.

15. Mélange sec de matériaux de construction selon l'une des revendications précédentes, **caractérisé en ce que** le mélange sec de matériaux de construction présente une masse volumique apparente dans la plage de 800 à 2000 kg/m³, en particulier de 900 à 1750 kg/m³, de préférence de 1000 à 1600 kg/m³.

16. Utilisation d'un mélange sec de matériaux de construction, en particulier d'un mélange sec de liants, selon l'une des revendications précédentes, dans des liants ou en tant que liants, en particulier pour la fabrication d'enduits, de mortiers, de réfractaires pour fond de creuset, pour masse d'égalisation de fond, de chapes et de matériaux de rebouchage et d'égalisation.

17. Liant, en particulier choisi dans le groupe des enduits, des mortiers, des réfractaires pour fond de creuset, des masses d'égalisation du fond, des chapes et des matériaux de rebouchage et d'égalisation, pouvant être obtenu par préparation avec de l'eau d'un mélange sec de matériaux de construction, en particulier un mélange sec de liants, selon l'une des revendications précédentes.

18. Liant selon la revendication 17, **caractérisé**
**en ce que** le liant peut être obtenu par préparation avec de l'eau en des quantités de 5 à 60 % en poids, en particulier de 10 à 50 % en poids, de préférence de 15 à 45 % en poids, par rapport au liant, et/ou
**en ce que** le liant présente un rapport eau/solide (valeur E/S) dans la plage de 0,1 à 0,7, en particulier de 0,2 à 0,6, et/ou
**en ce que** des objets moulés fabriqués à l'aide du liant présentent après 28 jours de durcissement une résistance à la compression d'au moins 10 N/mm², en particulier d'au moins 11 N/mm², de préférence d'au moins 12 N/mm², et/ou allant jusqu'à 50 N/mm².

19. Utilisation d'une combinaison (a) d'une part de trass et (b) d'autre part de kaolin et/ou de métakaolin pour augmenter la résistance, en particulier la résistance à la compression et/ou à la flexion, de systèmes liants, en particulier de systèmes liants sans ciment, en particulier à base de chaux vive et/ou de chaux éteinte, (a) d'une part le trass et (b) d'autres part le kaolin et/ou le métakaolin étant utilisés dans un mélange sec de matériaux de construction selon l'une des revendications 1 à 15.

20. Procédé pour augmenter la résistance, en particulier la résistance à la compression et/ou à la flexion, d'un système liant, en particulier d'un système liant sans ciment, en particulier à base de chaux vive et/ou de chaux éteinte, dans lequel on ajoute au système liant, en particulier à la chaux vive et/ou à la chaux éteinte, une combinaison (a) d'une part de trass et (b) d'autre part de kaolin et/ou de métakaolin, (a) d'une part le trass et (b) d'autre part le kaolin et/ou le métakaolin étant utilisés dans un mélange sec de matériaux de construction selon l'une des revendications 1 à 15.
